(19) Europäisches Patentamt
European Patent Office
Office européen des brevets

(11) **EP 2 445 253 A1**

(12) **EUROPEAN PATENT APPLICATION**
published in accordance with Art. 153(4) EPC

(43) Date of publication:
**25.04.2012 Bulletin 2012/17**

(51) Int Cl.:
*H04W 28/18* (2009.01)    *H04B 7/04* (2006.01)
*H04J 11/00* (2006.01)    *H04J 99/00* (2009.01)

(21) Application number: **10789350.5**

(22) Date of filing: **25.05.2010**

(86) International application number:
**PCT/JP2010/058840**

(87) International publication number:
**WO 2010/146975 (23.12.2010 Gazette 2010/51)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **18.06.2009 JP 2009145491**

(71) Applicant: **Sharp Kabushiki Kaisha
Osaka-shi, Osaka 545-8522 (JP)**

(72) Inventors:
• **SHIMEZAWA, Kazuyuki**
  **c/o SHARP Kabushiki Kaisha**
  **Osaka-shi, Osaka 545-8522 (JP)**
• **NOGAMI, Toshizo**
  **c/o SHARP Kabushiki Kaisha**
  **Osaka-shi, Osaka 545-8522 (JP)**

(74) Representative: **Müller - Hoffmann & Partner
Patentanwälte
Innere Wiener Straße 17
81667 München (DE)**

(54) **COMMUNICATION SYSTEM, COMMUNICATION APPARATUS AND COMMUNICATION METHOD**

(57)    In a communication system in which cooperative communication is performed, adaptive control is performed efficiently relating mainly to precoding processing. There are included, in an anchor base station 1201, steps of: generating a first channel state measurement reference signal, determining precoding processing for a data signal to be transmitted to a mobile terminal 1203 based on feedback information, and adaptively performing precoding processing on a data signal based on the determined precoding processing, in a cooperative base station 1202, steps of; generating a second channel state measurement reference signal and performing precoding processing specified in advance on a data signal to be transmitted to the mobile terminal 1203, and, in the mobile terminal 1203, a step of generating feedback information based on the measured first channel state and second channel state.

*FIG.5*

**EP 2 445 253 A1**

**Description**

Technical Field

The present invention relates to technology to perform cooperative communication and, more particularly, to precoding processing and to a communication system, a communication apparatus, and a communication method, capable of efficiently performing adaptive control.

Background Art

For example, in a mobile radio communication system such as LTE (Long Term Evolution), LTE-Advanced, or WiMAX, it is possible to extend a communication area by configuring areas covering a base station (transmission station, transmission apparatus, eNodeB) into a cellular configuration in which a plurality of the areas is arranged in the form of a cell. Furthermore, by using different frequencies among neighboring cells (sectors), it is possible for even a mobile terminal (reception station, mobile station, reception apparatus, UE (User Equipment)) to perform communication without being interfered. However, there is a problem of spectrum efficiency. Although spectrum efficiency can be improved considerably by repeatedly using the same frequency in each cell (sector), it is necessary to take steps to prevent a mobile terminal located in a cell edge (cell end) region from being interfered.

In such circumstances, a method for reducing or suppressing interference on a mobile terminal in a cell edge region by performing cell-to-cell cooperative communication in which neighboring cells cooperate with each other has been proposed. For example, in Non-Patent Document 1, as such a method, the CoMP (Cooperative Multipoint) transmission scheme is being examined. Furthermore, as cell-to-cell cooperative communication, Joint Processing, Joint Transmission, in which the same or different data is transmitted between cells in a cooperative manner, Coordinated Scheduling / Beamforming in which scheduling and control are performed in cooperation among cells, or the like, are being examined.

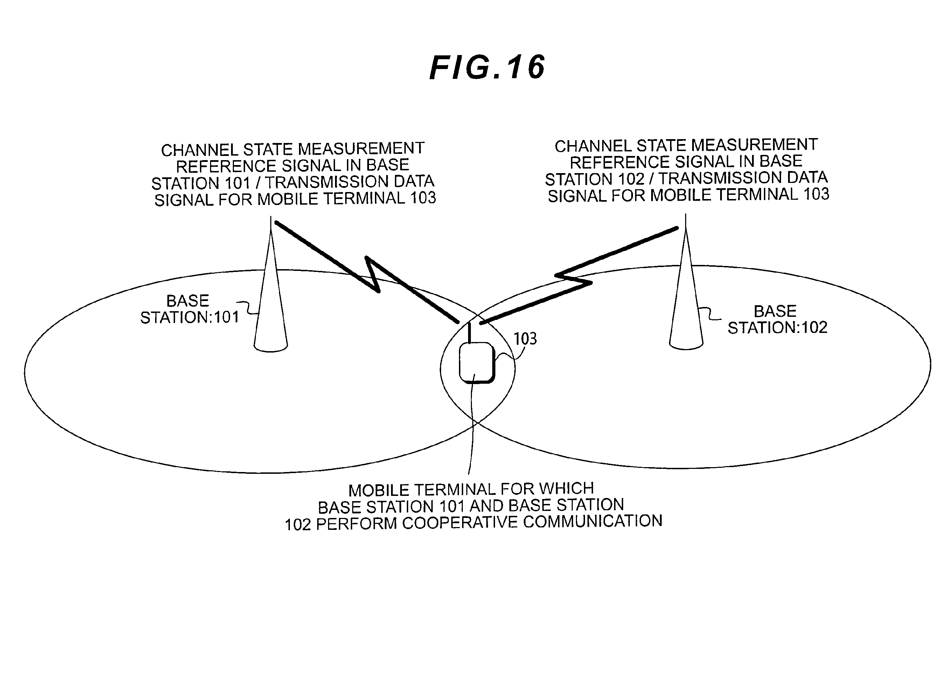

Fig. 16 is a diagram illustrating an example in which a mobile terminal 103 located in a cell end region performs cooperative communication. In Fig. 16, the mobile terminal 103 is located in each cell end region (boundary region) of a base station 101 and a base station 102, and performs cooperative communication from the base station 101 and the base station 102. The mobile terminal 103 receives a channel state measurement reference signal from the base station 101 and the base station 102, respectively, as well as receiving a transmission data signal for the mobile terminal 103 from both.

The mobile terminal can realize more efficient data transmission by estimating a channel state between the base station and the mobile terminal through the use of the channel state measurement reference signal and by adaptively controlling the modulation and coding scheme (MCS), spatial multiplexing number (layer, rank), precoding weight (precoding matrix), etc. , based on the estimation result. For example, it is possible to use a method described in Non-Patent Document 2.

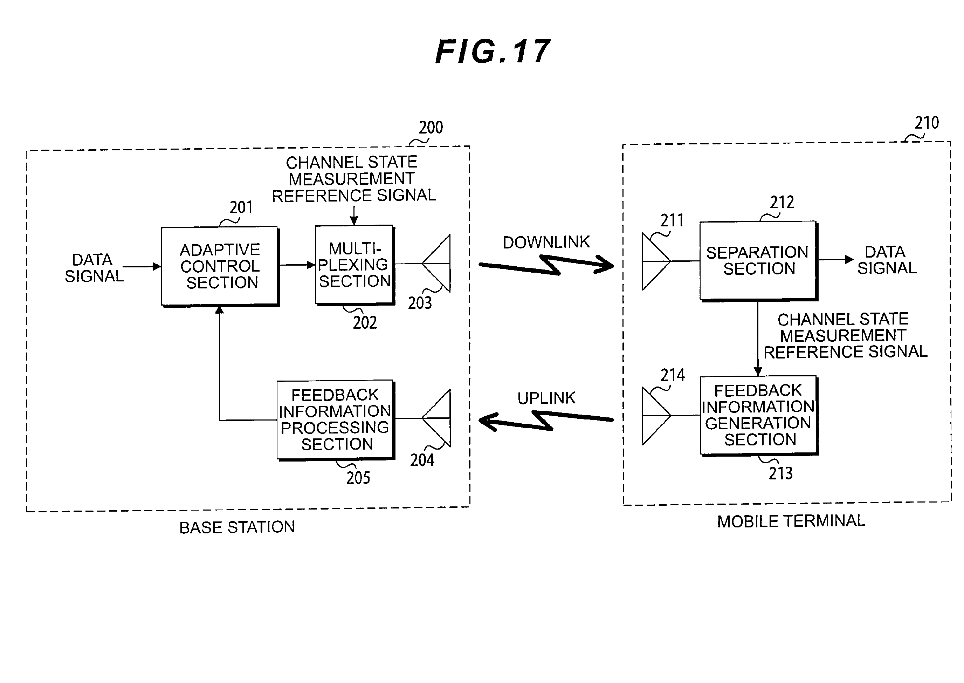

Fig. 17 is a block diagram illustrating an example, in which adaptive control is performed in view of a downlink through which data is transmitted from a base station 200 to a mobile terminal 210.

In the base station 200, first, a channel state measurement reference signal (RS, pilot signal, already known signal) specific to the base station is multiplexed on a data signal for the mobile terminal 210 or a data signal for another mobile terminal in a multiplexing section 202 and is transmitted from a transmission antenna 203. In the mobile terminal 210, the channel state measurement reference signal is separated from the signal received by a reception antenna 211 in a separation section 212. In a feedback information generation section, feedback information is generated based on the channel state measurement reference signal and is transmitted from a transmission antenna 214 through an uplink. In the base station 200, the feedback information transmitted from the mobile terminal 210 is identified and processed from the signal received by a reception antenna 204 in a feedback information processing section 205. In an adaptive control section 201, adaptive control is performed on the data signal for the mobile terminal 210 based on the received feedback information.

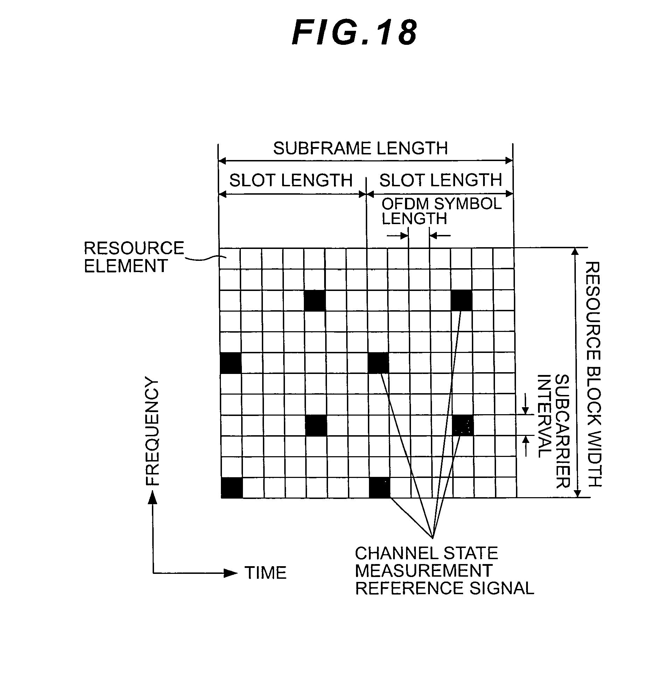

Fig. 18 is a diagram illustrating a use example of a channel state measurement reference signal specific to a base station in the multicarrier transmission scheme. When the multicarrier transmission scheme such as the OFDM (Orthogonal Frequency Division Multiplexing) scheme and OFDMA (Orthogonal Frequency Division Multiple Access) scheme, is used as a transmission scheme, it is possible to use a reference signal scattered to a resource element (element configured by one subcarrier in one OFDM symbol) in the direction of frequency and the direction of time as a channel state measurement reference signal specific to a base station. It is possible to use information indicative of a channel state (CSI (Channel State Information)), recommended transmission format information for a base station (CQI (Channel Quality Indicator), RI (Rank Indicator), PMI (Precoding Matrix Index)), etc., as recommended feedback information with which estimation is made through the use of such a reference signal.

Non-Patent Document 1: 3rd Generation Partnership Project; Technical Specification Group Radio Access Network; Further Advancements for E-UTRA Physical Layer Aspects (Release 9), 3GPP TR 36.814 V1.1.1 (2009-06), June, 2009.

Non-Patent Document 2: 3rd Generation Partnership Project; Technical Specification Group Radio Access Network; Evolved Universal Terrestrial Radio Access (E-UTRA); Physical layer procedures (Release 8), 3GPP TS 36.213 V8.7.0 (2009-05), May, 2009.

Disclosure of the Invention

However, in the conventional communication scheme, it is not considered that adaptive control is performed efficiently and appropriately in the communication system in which cooperative communication can be performed, and this leads to a factor in impeding improvement of transmission efficiency.

The present invention has been made in view of such circumstances and relates mainly to precoding processing in a communication system in which cooperative communication is performed, and an object thereof is to provide a communication system, a communication apparatus, and a communication method capable of efficiently performing adaptive control.

(1) In order to achieve the above-mentioned object, the present invention works out the following measures. That is, a communication system of the present invention includes a first communication apparatus for adaptively performing precoding processing, at least one second communication apparatus for fixedly performing precoding processing, and at least one third communication apparatus for performing cooperative communication between the first communication apparatus and the second communication apparatus.

Because of this, it is possible to efficiently perform adaptive control relating mainly to precoding processing in a communication system in which cooperative communication is performed.

(2) In the communication system of the present invention, the first communication apparatus includes: a first channel state measurement reference signal generation section to generate a first channel state measurement reference signal for measuring a first channel state of the channel between the first communication apparatus and the third communication apparatus; a feedback information processing section to determine precoding processing for a data signal to be transmitted to the third communication apparatus based on feedback information acquired from the third communication apparatus; and a first precoding section to adaptively perform precoding processing on a data signal based on precoding processing determined by the feedback information processing section, the second communication apparatus includes: a second channel state measurement reference signal generation section to generate a second channel state measurement reference signal for measuring a second channel state of the channel between the second communication apparatus and the third communication apparatus; and a second precoding section to perform precoding processing specified in advance on a data signal to be transmitted to the third communication apparatus, the third communication apparatus includes a feedback information generation section to generate feedback information based on the first channel state and the second channel state measured by using the first channel state measurement reference signal and the second channel state measurement reference signal, and the third communication apparatus transmits the feedback information to the first communication apparatus and the first communication apparatus and the second communication apparatus respectively transmit a data signal having been subjected to precoding processing to the third communication apparatus, and thus cooperative communication is performed.

As described above, the third communication apparatus transmits feedback information to the first communication apparatus, and the first communication apparatus and the second communication apparatus respectively transmit a data signal having been subjected to precoding processing to the third communication apparatus, and thus cooperative communication is performed. Therefore, it is no longer necessary for the third communication apparatus to feed back precoding control information to the second communication apparatus. Furthermore, it is no longer necessary for the first communication apparatus to notify the second communication apparatus of precoding control information, and thus the overhead of feedback information can be reduced and at the same time, the processing in a system in which cooperative communication is performed can be reduced. Moreover, as the number of the second communication apparatuses increases, the effect to be obtained is magnified.

(3) In the communication system of the present invention, the second precoding section performs precoding processing by switching to any one of a plurality of pieces of precoding processing specified in advance.

As described above, the second precoding section performs precoding processing by switching to any of a plurality of pieces of precoding processing specified in advance, and thus it is no longer necessary for the third communication apparatus to feed back precoding control information to the second communication apparatus. Furthermore, it is no longer necessary for the first communication apparatus to notify the second communication apparatus of precoding control information, and thus the overhead of feedback information can be reduced and at the same time, the processing in a system in which cooperative communication is performed can be reduced. Moreover, as the number of the second communication apparatuses increases, the effect to be obtained is magnified. Still further, precoding matrices used in the second communication apparatus are switched periodically, and thus it is possible for the third communication apparatus to further maintain reception performance.

(4) In the communication system of the present invention, the feedback information generation section generates precoding control information for controlling precoding processing performed by the first precoding section.

As described above, the feedback information generation section generates precoding control information for controlling precoding processing performed by the first precoding section, and thus it is possible to reduce or suppress interference to the third communication apparatus located in a cell edge (cell end) region.

(5) In the communication system of the present invention, the feedback information generation section determines precoding processing performed by the first precoding section so that precoding processing performed by the second precoding section becomes optimal.

As described above, precoding processing performed by the first precoding section is determined so that precoding processing performed by the second precoding section becomes optimal, and thus it is possible to reduce or suppress interference on the third communication apparatus located in a cell edge (cell end) region.

(6) In the communication system of the present invention, the feedback information generation section determines precoding processing performed by the first precoding section so that the reception state of the information data signal becomes optimal, which is to be transmitted to the third communication apparatus by the first communication apparatus and the second communication apparatus in cooperation with each other.

As described above, precoding processing performed by the first precoding section is determined so that the reception state of the information data signal becomes optimal, which is to be transmitted to the third communication apparatus by the first communication apparatus and the second communication apparatus in cooperation with each other, and thus it is possible to reduce or suppress interference on the third communication apparatus located in a cell edge (cell end) region.

(7) In the communication system of the present invention, the feedback information generation section generates first channel state information, which is information based on the first channel state, and second channel state information, which is information based on the second channel state, and the feedback information processing section determines precoding processing performed by the first precoding section based on the first channel state information, the second channel state information, and precoding processing performed by the second precoding section.

As described above, precoding processing performed by the first precoding section is determined based on the first channel state information, the second channel state information, and precoding processing performed by the second precoding section, and thus it is possible to reduce or suppress interference on the third communication apparatus located in a cell edge (cell end) region.

(8) The communication system of the present invention is a communication system made up of a first communication apparatus to adaptively perform precoding processing, at least one second communication apparatus to adaptively perform precoding processing, and at least one third communication apparatus to perform cooperative communication between the first communication apparatus and the second communication apparatus, wherein the first communication apparatus includes: a first channel state measurement reference signal generation section to generate a first channel state measurement reference signal for measuring a first channel state of the channel between the first communication apparatus and the third communication apparatus; a feedback information processing section to determine precoding processing for a data signal to be transmitted to the third communication apparatus based on feedback information acquired from the third communication apparatus; and a first precoding section to adaptively perform precoding processing on a data signal based on precoding processing determined by the feedback information processing section, the second communication apparatus includes: a second channel state measurement reference signal generation section to generate a second channel state measurement reference signal for measuring a second channel state of the channel between the second communication apparatus and the third communication apparatus; and a second precoding section to update a precoding matrix with a frequency lower than an update frequency of the precoding matrix in the first precoding section and perform precoding processing on a data signal to be transmitted to the third communication apparatus, the third communication apparatus includes a feedback information generation section to generate feedback information based on the first channel state and the second channel state measured by using the first channel state measurement reference signal and the second channel state measurement reference signal, and the third communication apparatus transmits the feedback information to the first communication apparatus and the first communication apparatus and the second communication apparatus respectively transmit a data signal having been subjected to precoding processing to the third precoding processing, and thus cooperative communication is performed.

As described above, the second communication apparatus updates a precoding matrix with a frequency lower than an update frequency of the precoding matrix in the first precoding section, and thus the third communication apparatus can reduce the frequency, with which precoding control information is fed back to the second communication apparatus. Furthermore, the first communication apparatus can reduce the frequency of notifying the second communication apparatus of precoding control information, and thus the overhead of feedback information can be reduced and at the same time, the processing in a system in which cooperative communication is performed can be reduced. Furthermore, by quasi-fixing precoding processing in the second communication apparatus, it is possible for the third communication apparatus to maintain reception performance. Still further, as the number of the second communication apparatuses increases, the effect to be obtained is magnified.

(9) The communication system of the present invention is a communication system in which data is transmitted from a transmission apparatus including a first port and a second port to a reception apparatus, wherein the transmission apparatus includes: a first channel state measurement reference signal generation section to generate a first channel state measurement reference signal for measuring a first channel state between the first port and the reception apparatus; a second channel state measurement reference signal generation section to generate a second channel state measurement reference signal for measuring a second channel state between the second port and the reception apparatus; a feedback information processing section to determine precoding processing for a data signal to be transmitted to the reception apparatus based on feedback information acquired from the reception apparatus; and a precoding section to adaptively perform precoding processing on a data signal to be transmitted from the first port and the second port based on precoding processing determined by the feedback information processing section, and the reception apparatus includes a feedback information generation section to generate feedback information including one of precoding processing information for the first port and precoding processing information for the second port based on the first channel state and the second channel state measured by using the first channel state measurement reference signal and the second channel state measurement reference signal.

(10) In the communication system of the present invention, the frequency with which the feedback information includes precoding processing information for the first port is higher than the frequency with which the feedback information includes precoding processing information for the second port.

(11) In the communication system of the present invention, precoding processing information for the first port is generated by furthermore referring to precoding processing information for the second port generated before the generation thereof.

(12) In the communication system of the present invention, precoding processing information for the second port is generated by further referring to precoding processing information for the first port generated before the generation thereof.

(13) The communication apparatus of the present invention is a communication apparatus applied to a communication system including a first communication apparatus to adaptively perform precoding processing, at least one second communication apparatus to fixedly perform precoding processing, and at least one third communication apparatus to perform cooperative communication between the first communication apparatus and the second communication apparatus, and the communication apparatus includes: a first channel state measurement reference signal generation section to generate a first channel state measurement reference signal for measuring a first channel state of the channel between the first communication apparatus and the third communication apparatus; a feedback information processing section to determine precoding processing for a data signal to be transmitted to the third communication apparatus based on feedback information acquired from the third communication apparatus; and a first precoding section to adaptively perform precoding processing on a data signal based on precoding processing determined by the feedback information processing section.

As described above, precoding processing is performed adaptively on a data signal based on precoding processing determined by the feedback information generation section, and thus it is no longer necessary for the third communication apparatus to feed back precoding control information to the second communication apparatus. Furthermore, it is no longer necessary for the first communication apparatus to notify the second communication apparatus of precoding control information, and thus, the overhead of feedback information can be reduced and at the same time, the processing in a system in which cooperative communication is performed can be reduced. Furthermore, as the number of the second communication apparatuses increases, the effect to be obtained is magnified.

(14) The communication apparatus of the present invention is a communication apparatus applied to a communication system including a first communication apparatus to adaptively perform precoding processing, at least one second communication apparatus to fixedly perform precoding processing, and at least one third communication apparatus to perform cooperative communication between the first communication apparatus and the second communication apparatus, and the communication apparatus includes: a second channel state measurement reference signal generation section to generate a second channel state measurement reference signal for measuring a second channel state of the channel between the second communication apparatus and the third communication apparatus; and a second precoding section to perform precoding processing specified in advance on a data signal to be transmitted to the third communication apparatus.

As described above, the second communication apparatus performs precoding processing specified in advance on a data signal to be transmitted to the third communication apparatus, and thus it is no longer necessary for the third communication apparatus to feed back precoding control information to the second communication apparatus. Furthermore, it is no longer necessary for the first communication apparatus to notify the second communication apparatus of precoding control information, and thus the overhead of feedback information can be reduced and at the same time, the processing in a system in which cooperative communication is performed can be reduced. Moreover, as the number of the second communication apparatuses increases, the effect to be obtained is magnified.

(15) The communication system of the present invention is a communication apparatus applied to a communication system including a first communication apparatus to adaptively perform precoding processing, at least one second communication apparatus to fixedly perform precoding processing, and at least one third communication apparatus to perform cooperative communication between the first communication apparatus and the second communication apparatus, and the communication apparatus includes: a feedback information generation section to generate feedback information based on the first channel state and the second channel state measured by using a first channel state measurement reference signal for measuring a first channel state of the channel between the first communication apparatus and the third communication apparatus and a second channel state measurement reference signal for measuring a second channel state of the channel between the second communication apparatus and the third communication apparatus, wherein the feedback information is transmitted to the first communication apparatus and a data signal having been subjected to precoding processing is received from the first communication apparatus and the second communication apparatus, respectively.

As described above, feedback information is generated based on the first channel state and the second channel state measured by using a first channel state measurement reference signal for measuring a first channel state of the channel between the first communication apparatus and the second and third communication apparatuses and a second channel state measurement reference signal for measuring a second channel state of the channel between the second communication apparatus and the first and third communication apparatuses, and thus it is possible for the third communication apparatus to estimate a channel state between the first and second communication apparatuses and adaptively control the modulation and coding scheme (MCS), spatial multiplexing number (layer, rank), precoding weight (precoding matrix), etc., based on the estimation result. As a result of that, it is possible to realize more efficient data transmission.

(16) The communication method of the present invention is a communication method in a communication system including a first communication apparatus to adaptively perform precoding processing, at least one second communication apparatus to fixedly perform precoding processing, and at least one third communication apparatus to perform cooperative communication between the first communication apparatus and the second communication apparatus, and the method includes, in the first communication apparatus, the steps of: generating a first channel state measurement reference signal for measuring a first channel state of the channel between the first communication apparatus and the third communication apparatus; determining precoding processing for a data signal to be transmitted to the third communication apparatus based on feedback information acquired from the third communication apparatus; and adaptively performing precoding processing on a data signal based on the determined precoding processing, in the second communication apparatus, the steps of: generating a second channel state measurement reference signal for measuring a second channel state of the channel between the second communication apparatus and the third communication apparatus; and performing precoding processing specified in advance on a data signal to be transmitted to the third communication apparatus, and, in the third communication apparatus, the step of generating feedback information based on the first channel state and the second channel state measured by using the first channel state measurement reference signal and the second channel state measurement reference signal, wherein the third communication apparatus transmits the feedback information to the first communication apparatus and the first communication apparatus and the second communication apparatus respectively transmit a data signal having been subjected to precoding processing to the third communication apparatus, and thus, cooperative communication is performed.

As described above, the third communication apparatus transmits the feedback information to the first communication apparatus and the first communication apparatus and the second communication apparatus respectively transmit a data signal having been subjected to precoding processing to the third communication apparatus, and thus, cooperative communication is performed, and thus it is no longer necessary for the third communication apparatus to feed back precoding control information to the second communication apparatus. Furthermore, it is no longer necessary for the first communication apparatus to notify the second communication apparatus of precoding control information, and thus the overhead of feedback information can be reduced and at the same time, the processing in a system in which cooperative communication is performed can be reduced. Furthermore, as the number of the second communication apparatuses increases, the effect to be obtained is magnified.

(17) The communication method of the present invention is a communication method of a first communication apparatus applied to a communication system including a first communication apparatus to adaptively perform precoding processing, at least one second communication apparatus to fixedly perform precoding processing, and at least one third communication apparatus to perform cooperative communication between the first communication apparatus and the second communication apparatus, and the method includes the steps of: generating a first channel state measurement reference signal for measuring a first channel state of the channel between the first communication apparatus and the third communication apparatus; determining precoding processing for a data signal to be transmitted to the third communication system based on feedback information acquired from the third communication apparatus; and adaptively performing precoding processing on a data signal based on the determined precoding processing.

As described above, the first communication apparatus adaptively performs precoding processing on a data signal based on precoding processing determined by the feedback information generation section, and thus, it is no longer necessary for the third communication apparatus to feed back precoding control information to the second communication apparatus. Furthermore, it is no longer necessary for the first communication apparatus to notify the second communication apparatus of precoding control information, and thus the overhead of feedback information can be reduced and at the same time, the processing in a system in which cooperative communication is performed can be reduced. Furthermore, as the number of the second communication apparatuses increases, the effect to be obtained is magnified.

(18) The communication method of the present invention is a communication method of a second communication apparatus applied to a communication system including a first communication apparatus to adaptively perform precoding processing, at least one second communication apparatus to fixedly perform precoding processing, and at least one third communication apparatus to perform cooperative communication between the first communication apparatus and the second communication apparatus, and the method includes the steps of: generating a second channel state measurement reference signal for measuring a second channel state of the channel between the second communication apparatus and the third communication apparatus; and performing precoding processing specified in advance on a data signal to be transmitted to the third communication apparatus.

As described above, the second communication apparatus performs precoding processing specified in advance on a data signal to be transmitted to the third communication apparatus, and thus, it is no longer necessary for the third communication apparatus to feed back precoding control information to the second communication apparatus. Furthermore, it is no longer necessary for the first communication apparatus to notify the second communication apparatus of precoding control information, and thus the overhead of feedback information can be reduced and at the same time, the processing in a system in which cooperative communication is performed can be reduced. Furthermore, as the number of the second communication apparatuses increases, the effect to be obtained is magnified.

(19) The communication method of the present invention is a communication method of a third communication apparatus applied to a communication system including a first communication apparatus to adaptively perform precoding processing, at least one second communication apparatus to fixedly perform precoding processing, and at least one third communication apparatus to perform cooperative communication between the first communication apparatus and the second communication apparatus, and the method includes the steps of: generating feedback information based on the first channel state and the second channel state measured by using a first channel state measurement reference signal for measuring a first channel state of the channel between the third communication apparatus and the first communication apparatus and a second channel state measurement reference signal for measuring a second channel state of the channel between the third communication apparatus and the second communication apparatus; transmitting the feedback information to the first communication apparatus; and receiving a data signal having been subjected to precoding processing from the first communication apparatus and the second communication apparatus, respectively.

As described above, feedback information is generated based on the first channel state and the second channel state measured by using a first channel state measurement reference signal for measuring a first channel state of the channel between the third communication apparatus and the first communication apparatus and a second channel state measurement reference signal for measuring a second channel state of the channel between the third communication apparatus and the second communication apparatus, and thus it is possible for the third communication apparatus to estimate a channel state between the first and second communication apparatuses and adaptively control the modulation and coding scheme (MCS), spatial multiplexing number (layer, rank), precoding weight (precoding matrix), etc., based on the estimation result. As a result of that, it is possible to realize more efficient data transmission.

According to the present invention, it is possible for the third communication apparatus to obviate the need to feed back precoding control information to the second communication apparatus or reduce the frequency thereof. Furthermore, it is no longer necessary for the first communication apparatus to notify the second communication apparatus of precoding control information, and thus, the overhead of feedback information can be reduced and at the same time, the processing in a system in which cooperative communication is performed can be reduced.

Brief Description of the Drawings

Fig. 1 is an outline block diagram illustrating a configuration of an anchor base station 400 according to a first embodiment of the present invention.
Fig. 2 is a diagram illustrating an example of a data signal demodulation reference signal, a channel state measurement reference signal, an information data signal, or a control information signal mapped by a layer mapping section 404 and a resource element mapping section 406.

Fig. 3 is an outline block diagram illustrating a configuration of a cooperative base station 600 according to the first embodiment of the present invention.

Fig. 4 is an outline block diagram illustrating a configuration of a mobile terminal according to the first embodiment of the present invention.

Fig. 5 is a diagram illustrating a case where PMI_x is generated so that optimum reception can be performed by cooperative communication when a cooperative base station 1202 performs precoding processing by using PMI_0 in the first embodiment of the present invention.

Fig. 6 is a diagram illustrating a case where an anchor base station 1201 transmits an information data signal having been subjected to precoding processing by using PMI_x and the cooperative base station 1202 transmits an information data signal having been subjected to precoding processing by using PMI_0 in the first embodiment of the present invention.

Fig. 7 is a diagram illustrating a case where PMI_x is generated so that optimum reception can be performed by cooperative communication when a cooperative relay station 1402 performs precoding processing by using PMI_0 in a second embodiment of the present invention.

Fig. 8 is a diagram illustrating a case where an anchor base station 1401 transmits an information data signal having been subjected to precoding processing by using PMI_x and the cooperative relay station 1402 transmits an information data signal having been subjected to precoding processing by using PMI_0 in the second embodiment of the present invention.

Fig. 9 is a diagram illustrating a case where an anchor base station 1601 performs adaptive precoding processing by using a fed-back precoding matrix and a cooperative base station 1602 performs precoding processing by periodically switching a plurality of kinds of fixed precoding matrices in a third embodiment of the present invention.

Fig. 10 is a diagram illustrating an example of switching for each subframe as a periodical switching method of the cooperative base station 1602 in the third embodiment of the present invention.

Fig. 11 is a diagram illustrating an example of switching for each subframe and for each resource block as a periodical switching method of the cooperative base station 1602 in the third embodiment of the present invention.

Fig. 12 is a diagram illustrating an example of switching for each subframe and for each sub band as a periodical switching method of the cooperative base station 1602 in the third embodiment of the present invention.

Fig. 13 shows an example of a flowchart of precoding control information and an information data signal used in a fourth embodiment of the present invention.

Fig. 14 a diagram illustrating a case where a mobile terminal 2103 feeds back first channel state information (CSI_x) and second channel state information (CSI_y) to an anchor base station 2101 in a fifth embodiment of the present invention.

Fig. 15 is a diagram illustrating a case where the anchor base station 2101 transmits an information data signal having been subjected to precoding processing by using PMI_x and a cooperative base station 2102 transmits an information data signal having been subjected to precoding processing by using PMI_0 in the fifth embodiment of the present invention.

Fig. 16 is a diagram illustrating an example in which a mobile terminal 103 located in a cell end region performs cooperative communication.

Fig. 17 is a block diagram illustrating an example in which adaptive control in view of a downlink through which data is transmitted from a base station 200 to a mobile terminal 210 is performed.

Fig. 18 is a diagram illustrating a use example of a channel state measurement reference signal specific to a base station in the multicarrier transmission scheme.

Fig. 19 is a diagram illustrating a case where a mobile terminal 803 transmits PMI_x and PMI_y to an anchor base station 801.

Fig. 20 is a diagram illustrating a case where the anchor base station 801 transmits an information data signal having been subjected to precoding processing by using PMI_x and a cooperative base station 802 transmits an information data signal having been subjected to precoding processing by using PMI_y.

Fig. 21 is a diagram illustrating a case where PMI_z is generated so that optimum reception can be performed when a mobile terminal 1003 performs cooperative communication.

Fig. 22 is a diagram illustrating a case where both an anchor base station 1001 and a cooperative base station 1002 transmit an information data signal having been subjected to precoding processing by using PMI_z.

Best Modes for Carrying Out the Invention

Hereinafter, embodiments of the present invention will be explained with reference to the drawings.

One example of a communication system already proposed will be explained.

Here, an effect obtained by performing precoding processing through the use of a fixed precoding matrix (PMI) in a cooperative base station 600 will be explained.

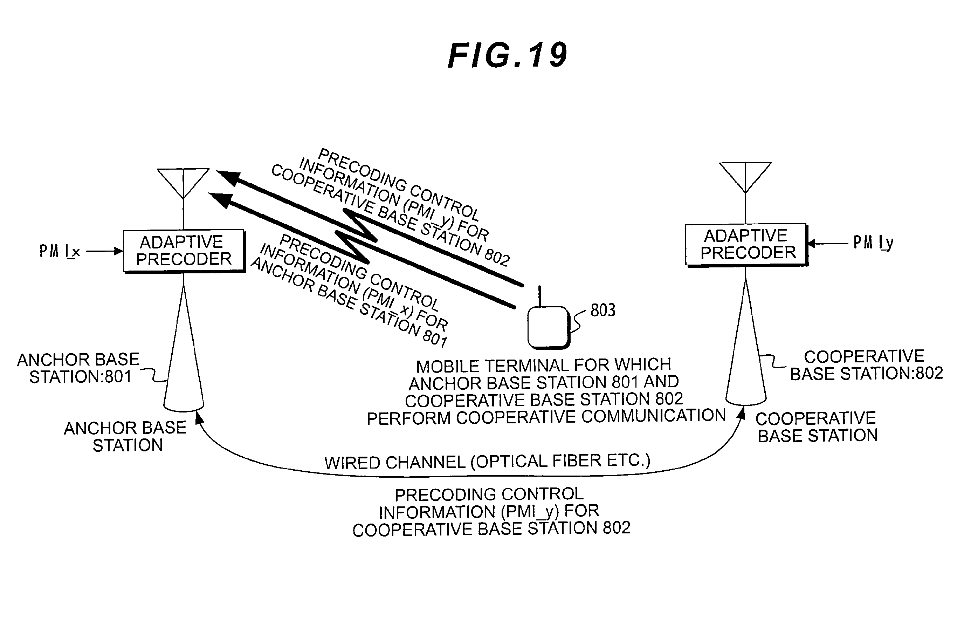

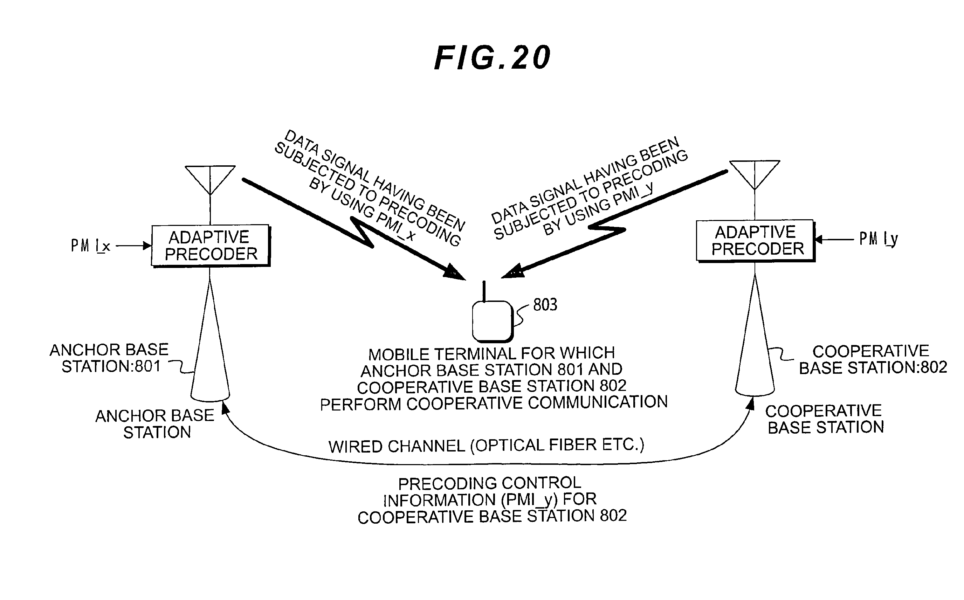

First, as shown in Fig. 19 and Fig. 20, a case will be explained where both an anchor base station 801 and a cooperative base station 802 perform adaptive precoding processing by precoding matrices independent of each other.

Fig. 19 is a diagram illustrating a case where a mobile terminal 803 transmits PMI_x and PMI_y to the anchor base station 801.

Fig. 20 is a diagram illustrating a case where the anchor base station 801 transmits an information data signal having been subjected to precoding processing by using PMI_x and the cooperative base station 802 transmits an information data signal having been subjected to precoding processing by using PMI_y. Through the use of a channel state measurement reference signal transmitted from the anchor base station 801 and the cooperative base station 802, the mobile terminal 803 generates precoding control information by a method for finding PMI based on SINR in each base station. At this time, the precoding control information for the anchor base station 801 is set as PMI_x, and the precoding control information for the cooperative base station 802 is set as PMI_y. As shown in Fig. 19, the mobile terminal 803 generates PMI_x and PMI_y so as to be able to perform optimum reception when performing cooperative communication.

Precoding control information for each base station is transmitted to the anchor base station 801 and the anchor base station 801 notifies the cooperative base station 802 of PMI_y through a wired line. Next, as shown in Fig. 20, when performing cooperative communication for the mobile terminal 803, the anchor base station 801 transmits an information data signal having been subjected to precoding processing by using PMI_x and the cooperative base station 802 transmits an information data signal having been subjected to precoding processing by using PMI_y.

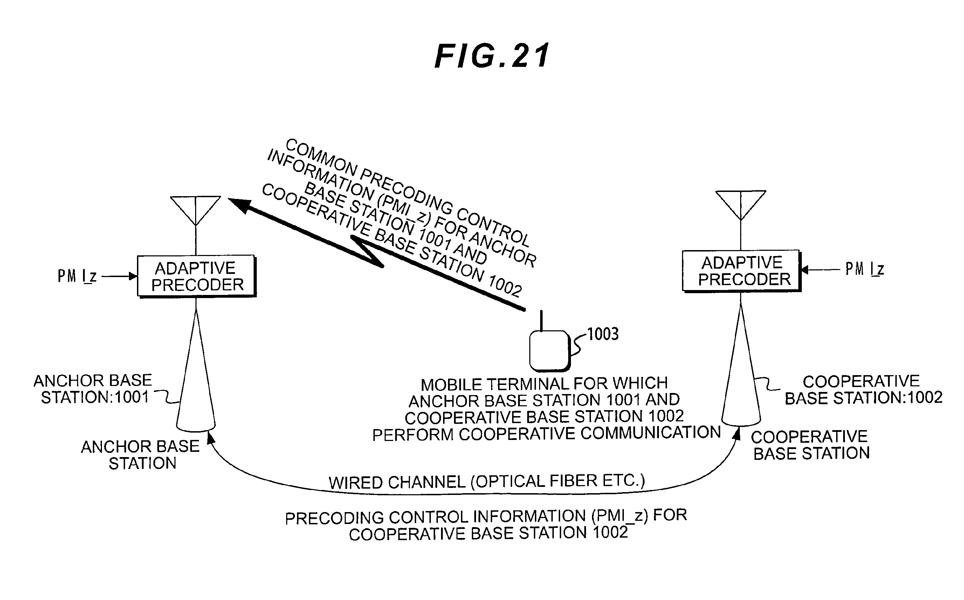

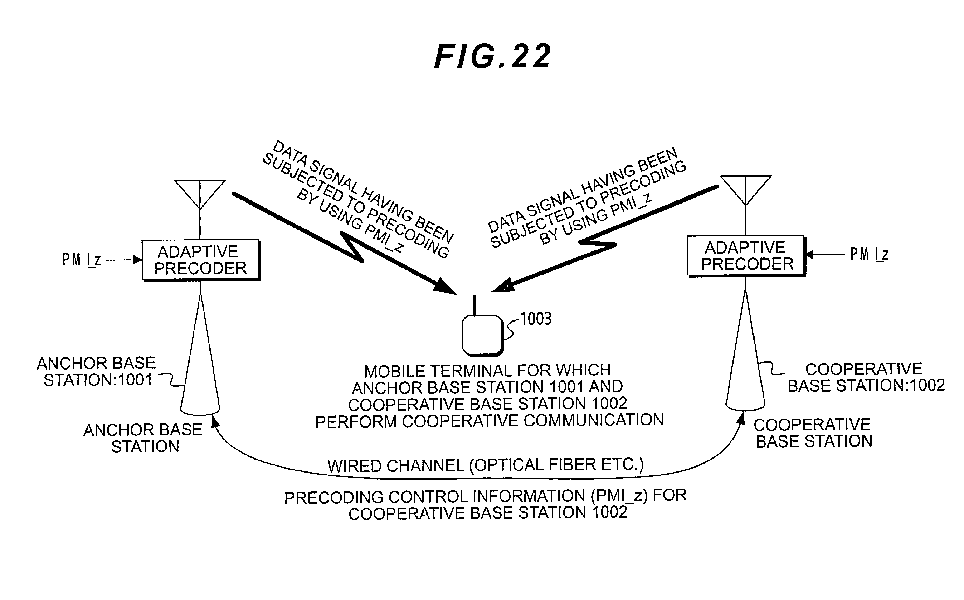

Next, a case will be explained where an anchor base station 1001 and a cooperative base station 1002 perform adaptive precoding processing by using a common precoding matrix as shown in Fig. 21 and Fig. 22,

Fig. 21 is a diagram illustrating a case where a mobile terminal 1003 generates PMI_z so as to be able to perform optimum reception when performing cooperative communication.

Fig. 22 is a diagram illustrating a case where both the anchor base station 1001 and the cooperative base station 1002 transmit an information data signal having been subjected to precoding processing by using PMI_z. Through the use of a channel state measurement reference signal transmitted from the anchor base station 1001 and the cooperative base station 1002, the mobile terminal 1003 generates precoding control information by a method for finding PMI based on comprehensive SINR. At this time, the precoding control information common to the anchor base station 1001 and the cooperative base station 1002 is set as PMI_z. As shown in Fig. 21, the mobile terminal 1003 generates PMI_z so as to be able to perform optimum reception when performing cooperative communication. Precoding control information common to each base station is transmitted to the anchor base station 1001 and the anchor base station 1001 notifies the cooperative base station 1002 of PMI_z through a wired line.

Next, as shown in Fig. 22, when performing cooperative communication on the mobile terminal 1003, both the anchor base station 1001 and the cooperative base station 1002 transmit an information data signal having been subjected to precoding processing by using PMI_z.

(First embodiment)

Hereinafter, a first embodiment of the present invention will be explained. A communication system in the first embodiment includes an anchor base station (first communication apparatus, serving base station, serving cell) and a cooperative base station (second communication apparatus) as a base station (transmission apparatus, cell, transmission point, transmission antenna group), and a mobile terminal (reception point, reception terminal, reception apparatus, third communication apparatus).

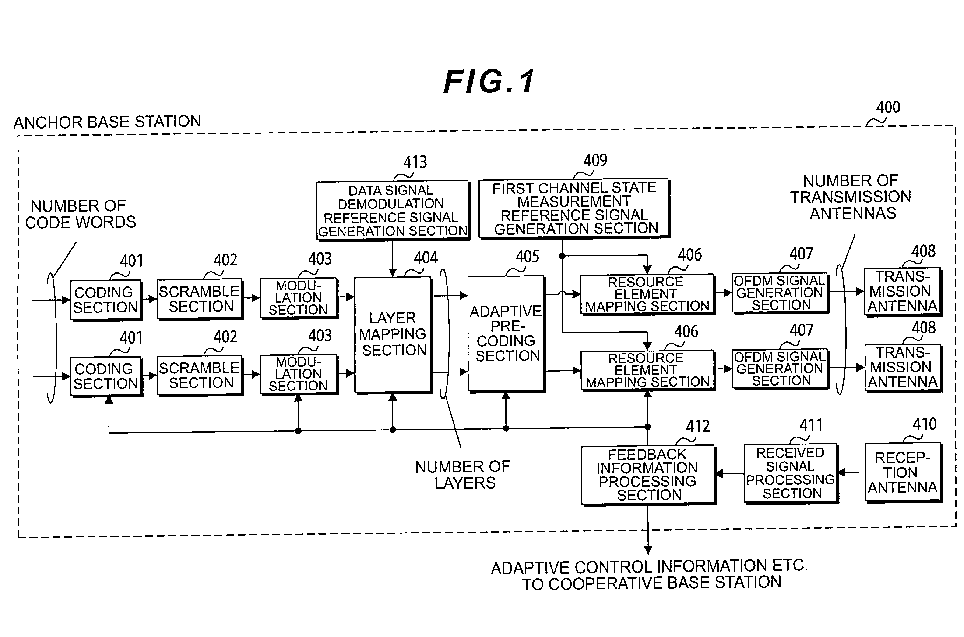

Fig. 1 is an outline block diagram illustrating a configuration of an anchor base station 400 according to the first embodiment of the present invention. Here, the anchor base station 400 is a base station to receive feedback information from a mobile terminal, a base station to transmit control information (for example, information transmitted by PDCCH (Physical Downlink Control CHannel) etc.) for a mobile terminal 210, etc., and is one of base stations that perform cooperative communication for the mobile terminal 210. In Fig. 1, the anchor base station 400 includes a coding section 401, a scramble section 402, a modulation section 403, a layer mapping section 404, an adaptive precoding section 405 (first precoding section), a resource element mapping section 406, an OFDM signal generation section 407, a transmission antenna 408, a data signal demodulation reference signal generation section 413, a first channel state measurement reference signal generation section 409, a reception antenna 410, a received signal processing section 411, and a feedback information processing section 412.

The reception antenna 410 receives a data signal including feedback information transmitted from the mobile terminal 210 through an uplink channel (for example, PUCCH (Physical Uplink Control CHannel), PUSCH (Physical Uplink Shared CHannel), etc.

The received signal processing section 411 performs reception processing such as OFDM demodulation processing, demodulation processing, and decoding processing, for the transmission processing the mobile terminal 210 has performed for transmission on a signal received by the reception antenna 410, identifies feedback information from the received signal, and outputs it to the feedback information processing section 412. Meanwhile, when a plurality of the mobile terminals 210 that communicate with the anchor base station 400 exists, it is possible to multiplex the mobile terminals 210 through the use of various access schemes such as SC-FDMA (Single carrier-frequency division multiple access), OFDMA, time division multiple access, and code division multiple access, as an uplink channel (that is, signal transmission from the mobile terminal 210 to a base station 200).

Furthermore, in the anchor base station 400, as a method for identifying feedback information for each of the mobile terminals 210, various methods can be used. For example, it is possible for the anchor base station 400 to identify feedback information by specifying a resource (element to transmit a signal divided by time, frequency, code, space domains etc.) with which each of the mobile terminals 210 transmits feedback information and by causing the mobile terminal 210 to transmit feedback information with the specified resource. Furthermore, it is also possible to enable the identification by adding a specific identification number etc. to each piece of feedback information for each of the mobile terminals 210.

The feedback information processing section 412 generates adaptive control information for performing various kinds of adaptive control for a data signal to be transmitted to the mobile terminal 210 based on feedback information such as input CSI, CQI, PMI, and RI. Adaptive control information in the anchor base station 400 is generated and is output to the coding section 401, the modulation section 403, the layer mapping section 404, the adaptive precoding section 405, and the resource element mapping section 406 in the anchor base station 400. Furthermore, adaptive control information for a coding section 601, a modulation section 603, a layer mapping section 604, and a resource element mapping section 606 in a cooperative base station 600, to be described layer, is generated and output to the cooperative base station 600 through a high-speed channel (preferably, a wired line, such as an optical fiber, or unique fixed radio channel). A channel that connects base stations can be used for various uses other than the case where it is used to communicate adaptive control information from the anchor base station 400 to the cooperative base station 600 and, for example, it is also possible to communicate base station information, control information, etc., to perform cooperative communication from the cooperative base station 600 to the anchor base station 400.

Here, an adaptive control method based on feedback information will be explained. First, when feedback information is recommended transmission format information for the base station 200, on the assumption that an already known transmission format is indexed in advance in both the base station 200 and the mobile terminal 210, the base station 200 performs adaptive control by using the transmission format. Specifically, CQI is information indicative of a coding rate and a modulation scheme, and thus it can control the coding section and the modulation section, PMI is information indicative of a precoding matrix, and thus it can control the precoding section, and RI is information indicative of the number of layers (ranks), and thus it can control the layer mapping section and an upper layer that generates a code word. Furthermore, when feedback information about mapping to a resource is also included, it is also possible to control the resource element mapping section.

Next, when feedback information is information indicative of a channel state, it is possible to perform optimum control in the base station 200. For example, it is possible to determine a precoding matrix so that the power when the mobile terminal 210 receives based on fed-back information is at its maximum and determine an optimum coding rate, modulation scheme, and the number of layers at that time, and various methods can be used.

To the coding section 401, one or more code words (transmission data signal, information data signal) to be transmitted are input, which are input from a processing apparatus in an upper layer of a transmission apparatus, not shown schematically. Each code word is coded by error correction code, such as turbo code, convolutional code, LDPC (Low Density Parity Check) code, etc., and output to the scramble section 402. Here, as a code word, it may also be possible to use a unit of processing to perform retransmission control, such as HARQ (Hybrid Automatic Repeat reQuest), a unit of processing to perform error correction coding, or a plurality of those units put together.

The scramble section 402 generates scramble codes that differ from base station to base station and performs scramble processing by using the generated scramble code on a signal coded by the coding section 401. The modulation section 403 performs modulation processing on a signal having been subjected to scramble processing by using a modulation scheme such as BPSK (Binary Phase Shift Keying), QPSK (Quadrature Phase Shift Keying), or QAM (Quadrature Amplitude Modulation), and outputs the signal to the layer mapping section 404.

The data signal demodulation reference signal generation section 413 generates a data signal demodulation reference signal (Dm-RS (Demodulation Reference Signal), DRS (Dedicated Reference Signal), Precoded RS, user specific reference signal, UE-specific RS), which is orthogonal between each layer (rank, spatial multiplexing number) as a reference signal to demodulate an information data signal in the mobile terminal 210 and outputs the signal to the layer mapping section 404.

At this time, when the data signal demodulation reference signal is a signal already known to both the base station and the mobile terminal, it is possible to use an arbitrary signal (system). For example, it is possible to use a random number and pseudo noise system based on parameters allocated in advance, such as, a number specific to the base station (cell ID) and a number specific to the mobile terminal (RNTI: Radio Network Temporary Identifier), (for example, it is possible to use M (Maximum-length) system, Gold code, orthogonal Gold code, Walsh code, OVSF (Orthogonal Variable Spreading Factor) code, Hadamard code, Barker code, etc., and further, it may also be possible to use a system that cyclically shifts those systems or a system that cyclically extends those systems. Furthermore, it may also be possible to use a system excellent in self-correlation characteristic and mutual correlation characteristic found by using a computer etc.). As a method for making orthogonal between layers, it is possible to use a method for making resource elements to map a data signal demodulation reference signal null (zero) between layers (for example, time division multiplexing, frequency division multiplexing, etc.), a code division multiplexing method using a pseudo noise system, etc.

The layer mapping section 404 maps a data signal demodulation reference signal input from the data signal demodulation reference signal generation section 413 to each layer (rank, spatial multiplexing number) that performs spatial multiplexing, such as MIMO (Multi-Input Multi-Output). Furthermore, the layer mapping section 404 maps a signal output from each of the modulation sections 403 to the resource element from which the data signal demodulation reference signal is removed for each layer. For example, when the number of code words is 2 and the number of layers is 8, then, it can be considered that each code word is converted into four parallel signals to make the number of layers 8, but this is not limited.

The adaptive precoding section 405 performs precoding processing on a signal output from the layer mapping section 404 and converts it into parallel signals in the number of antenna ports (transmission antenna, logic port). Here, as the precoding processing, it is possible to use processing by a predetermined precoding matrix, CDD (Cyclic Delay Diversity), transmission diversity (SFBC (Spatial Frequency Block Code), STBC (Spatial Time Block Code), TSTD (Time Switched Transmission Diversity), FSTD (Frequency Switched Transmission Diversity), etc.), but the processing is not limited to the above.

The first channel state measurement reference signal generation section 409 generates a first channel state measurement reference signal (cell-specific reference signal, CRS (Common RS), Cell-specific RS, Non-precoded RS) already known to both the anchor base station 400 and the mobile terminal 210 and outputs the signal to the resource element mapping section 406 in order to measure a channel state (first channel state) between the anchor base station 400 and the mobile terminal 210. At this time, if the first channel state measurement reference signal is a signal already known to both the anchor base station 400 and the mobile terminal 210, it is possible to use arbitrary signal (system). For example, it is possible to use a random number or pseudo noise system based on parameters allocated in advance, such as a number specific to the anchor base station 400 (cell ID). As a method for making orthogonal between antenna ports, it is possible to use a method for making resource elements to map a first channel state measurement reference signal null (zero) between antenna ports, a code division multiplexing method using a pseudo noise system, etc.

The resource element mapping section 406 maps a transmission data signal output from the adaptive precoding section 405 and a channel state measurement reference signal output from the first channel state measurement reference signal generation section 409 to the resource element of each antenna port.

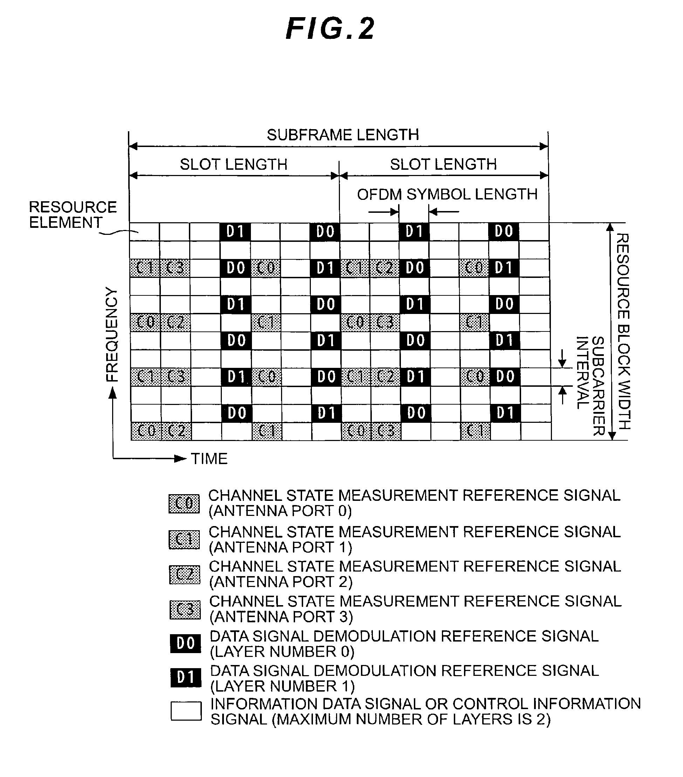

Fig. 2 is a diagram illustrating an example of a data signal demodulation reference signal, channel state measurement reference signal, information data signal, or control information signal mapped by the layer mapping section 404 and the resource element mapping section 406. Fig. 2 shows a case where each signal is mapped when the number of antenna ports is 4 and the number of layers is 2. Furthermore, Fig. 2 shows a resource block pair in which two resource blocks are arranged in the direction of time, each resource block including 12 subcarriers in the direction of frequency and 7 OFDM symbols in the direction of time. At this time, the 14 OFDM symbols configuring the resource block pair are referred to as subframes. Each subcarrier in one OFDM symbol is also referred to as a resource element. The 7 OFDM symbols in tandem in the direction of time of each subframe are also referred to as slots.

Of the colored resource elements in the diagram, data signal demodulation reference signals of layer numbers 0 to 1 are represented by D0 to D1, respectively, and channel state measurement reference signals of antenna ports 0 to 3 are represented by C0 to C3, respectively. Furthermore, in the resource element of the reference signal mapped to each layer and antenna port, the layers and antenna ports are made orthogonal by allocating nothing to the resource element in other layers and antenna ports to make them zero (null). Another method for making the layers and antenna ports orthogonal, it is also possible to apply code division multiplexing using a pseudo noise system.

It is also possible to change the number of OFDM symbols of the resource block. For example, when adding a long guard interval length, it is possible to set the number of OFDM symbols in one slot to 6. Furthermore, an information data signal or control information signal is mapped to resource elements other than the resource element to which the reference signal in the diagram is mapped. In this example, it is possible to set the number of layers of an information data signal or control information signal to 2 at maximum and for example, it is possible to set the number of layers of an information data signal to 2 and the number of layers of a control information signal to 1.

Here, it is possible to change the number of resource blocks according to the frequency bandwidth (system bandwidth) used by the communication system. For example, it is possible to use 6 to 110 resource blocks and further, by frequency aggregation, it is also possible to set the number of the entire system bandwidths to 110 or more. For example, it is possible to configure a component carrier with 20 MHz and achieve 100 MHz of the entire system bandwidth by using five component carriers.

An OFDM signal generation section 607 performs frequency-time transform processing on a signal in the frequency domain output from the resource element mapping section by inverse fast Fourier transform (IFFT) and transforms the signal into a signal in the time domain. Furthermore, a guard interval (cyclic prefix) is added by cyclically extending part of each OFDM symbol. The transmission antenna transmits a signal output from the OFDM signal generation section after performing transform processing to transform it from the base band into a radio frequency.

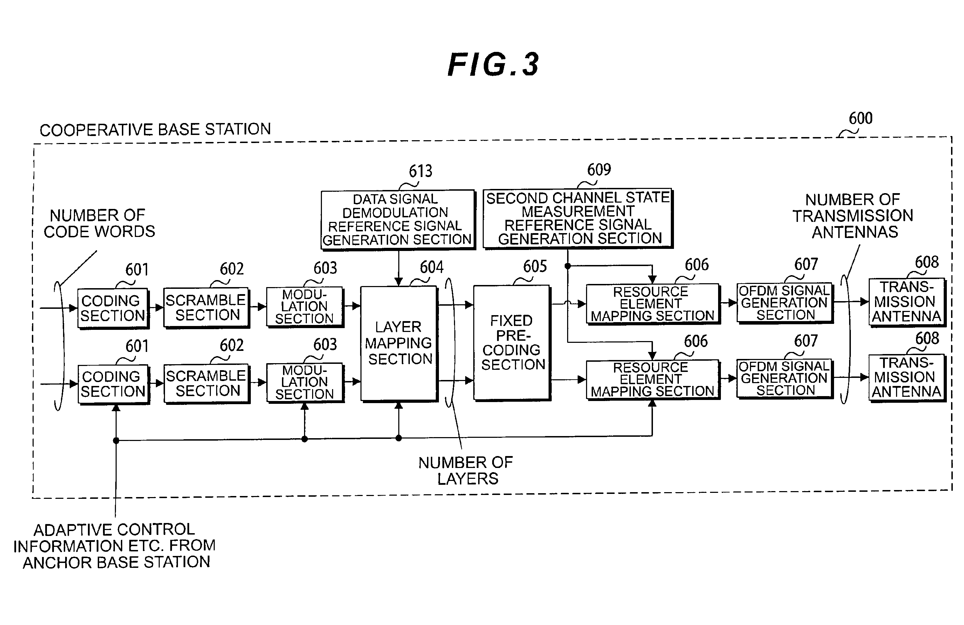

Fig. 3 is an outline block diagram illustrating a configuration of the cooperative base station 600 according to the first embodiment of the present invention. Here, the cooperative base station 600 is a base station of base stations that perform cooperative communication for the mobile terminal 210, excluding the anchor base station 400 explained in Fig. 1.

In Fig. 3, the cooperative base station 600 includes the coding section 601, a scramble section 602, the modulation section 603, the layer mapping section 604, a fixed precoding section 605 (second precoding section and in the present invention, a case is also included where it is fixed in advance to a plurality of kinds), the resource element mapping section 606, an OFDM signal generation section, a transmission antenna, a data demodulation reference signal generation section, and a second channel state measurement reference signal generation section.

The difference from the anchor base station explained in Fig. 1 lies in the fact that the adaptive precoding section 405 is replaced with the fixed precoding section 605 and each section to receive feedback information from the mobile terminal 210 is omitted. Furthermore, adaptive control information for adaptively controlling the coding section 601, the modulation section 603, the layer mapping section 604, and the resource element mapping section 606, respectively, is input from the anchor base station 400 through a wired line, such as an optical fiber. Hereinafter, as to the operation of the cooperative base station 600, parts different from those of the anchor base station 400 explained in Fig. 1 will be explained mainly.

A second channel state measurement reference signal generation section 609 generates a second channel state measurement reference signal (cell-specific reference signal, CRS (Common RS), Cell-specific RS, Non-precoded RS) already known to both the cooperative base station 600 and the mobile terminal 210 and outputs the signal to the resource element mapping section 606 in order to measure a channel state (second channel state) between the cooperative base station 600 and the mobile terminal 210. At this time, when the second channel state measurement reference signal is a signal already known to both the cooperative base station 600 and the mobile terminal 210, it is possible to use arbitrary signal (system). For example, it is possible to use a random number or pseudo noise system based on parameters allocated in advance, such as a number specific to the cooperative base station 600 (cell ID). As a method for making orthogonal between antenna ports, it is possible to use a method for making resource elements to map a second channel state measurement reference signal null (zero) between antenna ports, a code division multiplexing method using a pseudo noise system, etc.

Here, as a cooperative communication scheme, a case where the same information data signal is transmitted from the same resource element will be explained. A control information signal is transmitted only from the anchor base station 400 and the resource element in the cooperative base station 600, to which a control information signal is mapped, is set to be zero (null). Furthermore, it is preferable for channel state measurement reference signals to be orthogonal between the anchor base station 400 and the cooperative base station 600, and if so, it is possible to use various methods, such as frequency division multiplexing and code division multiplexing. It is desirable to map the same data signal demodulation reference signal to the same resource element between the anchor base station 400 and the cooperative base station 600. It may also be possible to make the data signal demodulation reference signals orthogonal between the anchor base station 400 and the cooperative base station 600 by frequency division multiplexing, time division multiplexing, code division multiplexing, etc.

Adaptive control is performed on the coding section 601, the modulation section 603, the layer mapping section 604, and the resource element mapping section 606 based on adaptive control information input from the anchor base station 400 through a wired line, such as an optical fiber. The fixed precoding section 605 performs precoding processing by using a fixed precoding matrix at all times on the mobile terminal 210 that performs cooperative communication with the anchor base station 400.

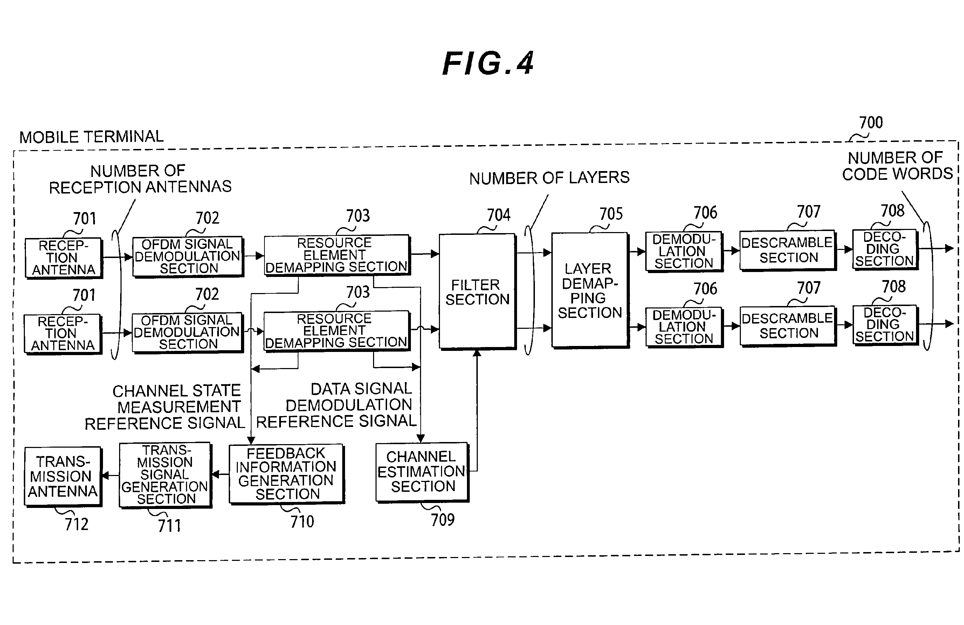

Fig. 4 is an outline block diagram illustrating a configuration of a mobile terminal 700 according to the first embodiment of the present invention. In Fig. 4, the mobile terminal 700 includes a reception antenna 701, an OFDM signal demodulation section 702, a resource element demapping section 703, a filter section 704, a layer demapping section 705, a demodulation section 706, a descramble section 707, a decoding section 708, a channel estimation section 709, a feedback information generation section 710 (channel state measurement section), a transmission signal generation section 711, and a transmission antenna 12.

The mobile terminal 700 includes the reception antenna 701 in the number of reception antennas, which is at least 1 and the reception antenna 701 receives a signal transmitted from the anchor base station 400 and the cooperative base station 600 and which has passed through a channel and performs transform processing to transform a signal of a radio frequency into a base band signal. The OFDM signal demodulation section 702 removes the added guard interval and performs time-frequency transform processing by fast Fourier transform (FFT) etc. to transform the signal into a signal in the frequency domain.

At this time, the received signal in a k-th subcarrier is expressed as follows.

[Formula 1]

$$\mathbf{R}(k) = \mathbf{H}(k)\mathbf{S}(k) + \mathbf{N}(k)$$

$$\mathbf{R}(k) = \begin{bmatrix} R_1(k) & \cdots & R_{N_R}(k) \end{bmatrix}^T$$

$$\mathbf{H}(k) = \begin{bmatrix} H_{11}(k) & \cdots & H_{1N_T}(k) \\ \vdots & \ddots & \vdots \\ H_{N_R 1}(k) & \cdots & H_{N_R N_T}(k) \end{bmatrix}$$

$$\mathbf{S}(k) = \begin{bmatrix} S_1(k) & \cdots & S_{N_T}(k) \end{bmatrix}^T$$

$$\mathbf{N}(k) = \begin{bmatrix} N_1(k) & \cdots & N_{N_R}(k) \end{bmatrix}^T$$

where $N_T$ is the number of transmission layers, $N_R$, the number of reception antennas, R(k), a received signal corresponding to each reception signal, S(k), a transmission signal (information data signal or control information signal) corresponding to each transmission layer, N(k), noise corresponding to each reception antenna, H(k), a frequency response corresponding to each reception antenna and each transmission layer, and T, a transposed matrix.

The resource element demapping section 703 demaps (separates) the signal mapped in the anchor base station 400 and the cooperative base station 600 and outputs the information data signal to the filter section 704, the channel state measurement reference signal to the feedback information generation section 710, and the data signal demodulation reference signal to the channel estimation section 709, respectively.

The channel estimation section 709 estimates (channel estimation) the variation (frequency response, transfer function) in amplitude and phase in each resource element for each layer of each of the reception antennas 701 and finds a channel estimation value based on the input data signal demodulation reference signal. As to the resource element to which no data signal demodulation reference signal is mapped, interpolation is performed in the direction of frequency and the direction in time based on the resource element to which the data signal demodulation reference signal is mapped and thus channel estimation is made. As an interpolation method, various methods can be used, such as, linear interpolation, parabolic interpolation, polynomial interpolation, Lagrange interpolation, spline interpolation, FFT interpolation, and minimum mean square error (MMSE) interpolation.

The filter section 704 performs channel compensation on the data signal for each of the reception antennas 701, which is output from the resource element demapping section 703 through the use of the channel estimation value output from the channel estimation section 709 and detects the transmission signal S(k). As a detection method, a method based on the ZF (Zero Forcing) criterion, a method based on MMSE criterion, etc., can be used. For example, when the weight coefficients used in detection based on ZF criterion or MMSE criterion is set as $M_{ZF}$ or $M_{MMSE}$, the following weight coefficients can be used.

[Formula 2]

$$\mathbf{M}_{ZF}(k) = \hat{\mathbf{H}}^{H}(k)\left(\hat{\mathbf{H}}(k)\hat{\mathbf{H}}^{H}(k)\right)^{-1}$$

$$\mathbf{M}_{MMSE}(k) = \hat{\mathbf{H}}^{H}(k)\left(\hat{\mathbf{H}}(k)\hat{\mathbf{H}}^{H}(k) + \hat{\sigma}^{2}\mathbf{I}_{N_{R}}\right)^{-1}$$

where H^(k) represents an estimated frequency response, H^H(k), a complex conjugate transposed matrix of H^(k), -1, an inverse matrix, σ^2, noise power, and $I_{NR}$, an identity matrix of $N_R \times N_R$. By using those weight coefficients M (k), the transmission signal for each transmission layer is estimated. When an estimated transmission signal is assumed to be S^(k), it is possible to detect as follows.

[Formula 3]

$$\hat{\mathbf{S}}(k) = \mathbf{M}(k)\mathbf{R}(k)$$

As other detection methods, it is also possible to apply a method based on MLD (Maximum Likelihood Detection) (for example, QRM-MLD (QR decomposition and M-algorithm MLD) etc.), a method based on SIC (Successive Interference Cancellation) (for example, Turbo SIC, MMSE-SIC, ZF-SIC, BLAST (Bell laboratories layered space-time architecture) etc.), a method based on PIC (Parallel Interference Cancellation), etc.

The layer demapping section 705 performs demapping processing to demap the signal of each layer to each code word. The demodulation section 706 performs demodulation based on the modulation scheme used in the anchor base station 400 and the cooperative base station 600. The descramble section 707 performs descramble processing based on the scramble code used in the anchor base station 400 and the cooperative base station 600. The decoding section 708 performs error correction decoding processing based on the coding method performed in the anchor base station 400 and the cooperative base station 600 and outputs to a processing apparatus, not shown schematically, of the upper layer of the mobile terminal 700.

In contrast, the feedback information generation section 710 generates feedback information based on the channel state measurement reference signal output from the resource element demapping section 703. As a method for generating feedback information, it is possible to generate feedback information by measuring and using the signal to interference plus noise power ratio (SINR), signal to interference power ratio (SIR), signal to noise power ratio (SNR), path loss, etc., by using the received reference signal.

As units with which feedback information is generated, it is possible to use the direction of frequency (for example, for each subcarrier, resource element, resource block, sub band configured by a plurality of resource blocks, etc.), the direction of time (for example, for each OFDM symbol, subframe, slot, radio frame, etc.), the spatial direction (for example, for each antenna port, transmission antenna, reception antenna, etc.), etc., and furthermore, it is also possible to combine those. Here, as feedback information, it is possible to use precoding matrix information (for example, PMI etc.) used in precoding processing performed by a precoding section of a transmission apparatus, MCS information (for example, CQI etc.) used in coding processing and modulation processing performed by a coding section and modulation section of a transmission apparatus, layer number information (for example, RI etc.) mapped by a layer mapping section of a transmission apparatus, information (for example, CSI (channel state information) etc.) indicative of a channel state measured by a mobile terminal, etc.

The transmission signal generation section 711 performs coding processing, modulation processing, OFDM signal generation processing, etc., in order to transmit (feed back) the feedback information output from the feedback information generation section 710 to the anchor base station 400 and generates a transmission signal. The transmission antenna 712 transmits a transmission signal including the feedback information generated by the transmission signal generation section 711 to the anchor base station 400 through an uplink channel.

Furthermore, the detailed procedure when feedback information is generated in the mobile terminal 700 will be explained. The anchor base station 400 notifies the mobile terminal 700 of a set of cells for which feedback information should be generated. Information about the set of cells includes the number of cells and each cell ID. The anchor base station 400 utilizes a measurement report acquired from the mobile terminal 700 in order to determine the set of cells with which this cooperative communication should be performed. This measurement report is created by the mobile terminal 700 measuring reference signal receiving power (RSRP) for each cell and notifying the anchor base station 400 of the measuring result, and is different from the feedback information.

First, the procedure to find CQI, PMI, and/or RI based on SINR as feedback information will be explained. It may also be to set CQI and PMI as a plurality of kinds of patterns (indexed) in advance and select one closest to the pattern.

When determining PMI, a precoding matrix of the anchor base station 400 is determined so that the reception state in the mobile terminal 700 becomes optimal at the time of cooperative communication on the assumption that the cooperative base station 600 performs precoding processing by using a precoding matrix specified (fixed) in advance. Here, an optimum reception state can include, for example, a state where the reference signal receiving power is at its maximum, a state where interference power from another base station or another mobile terminal is small (including a case where an interference canceller etc. is used), etc.

When determining CQI, a lookup table of CQI that satisfies required qualities for SINR is set in advance, SINR when performing cooperative communication is found, and CQI is determined from the lookup table. When determining RI, it may also be possible to determine based on the number of layers that satisfy the required qualities for SINR. When determining CQI or RI, it may also be possible to determine PMI in advance and determine based on SINR at that time.

When further finding channel state information (CSI) as feedback information, the channel state in the reception antenna port for each transmission antenna port is found. That is, for the anchor base station 400, the first channel state is measured by using the first channel state measurement reference signal and the first channel state information is generated. For the cooperative base station 600, the second channel state is measured by using the second channel state measurement reference signal and the second channel state information is generated. It is possible to perform compression processing on the feedback information based on CSI by using various compression methods and reduce the amount of feedback information. For example, it may also be possible to set a difference in channel states contiguous in the direction of time or the direction of frequency as feedback information. Furthermore, it may also be possible to find the feedback information for each sub band etc.

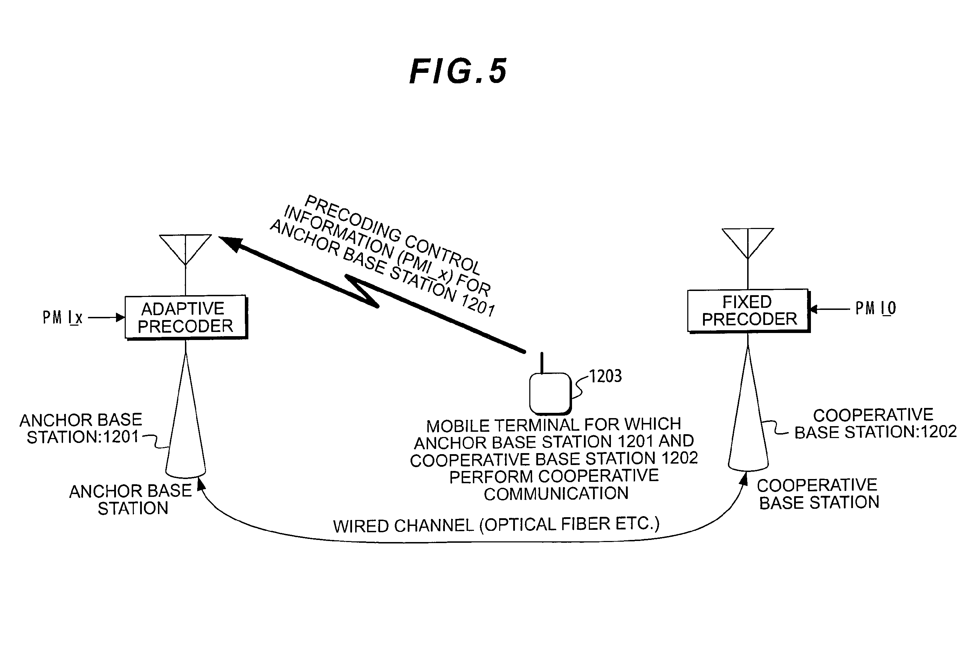

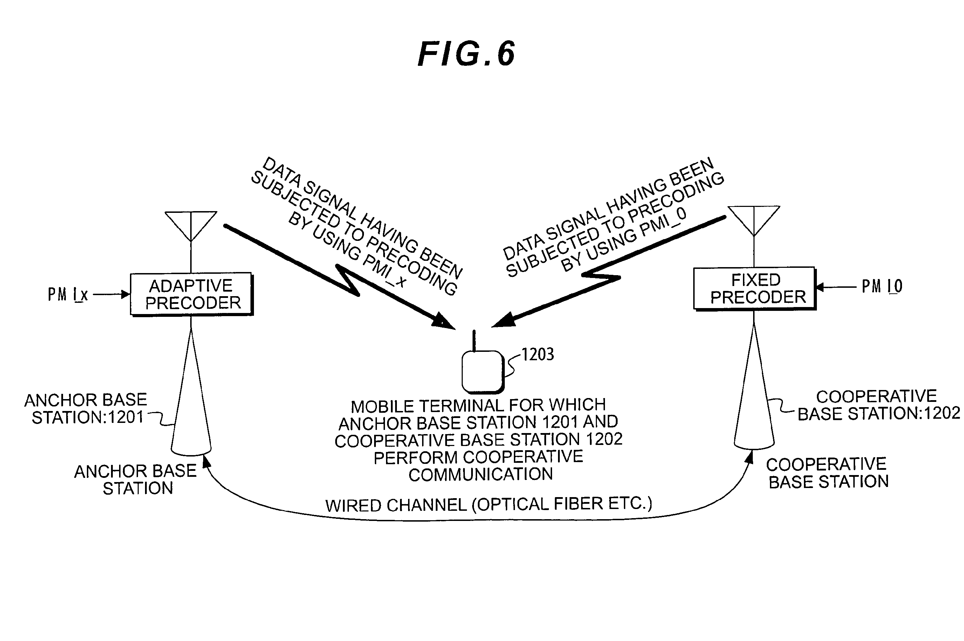

In contrast, as a method proposed in the present embodiment, a case will be explained, where an anchor base station 1201 performs adaptive precoding processing by using a fed-back precoding matrix and a cooperative base station 1202 performs precoding processing by using a fixed precoding matrix as shown in Fig. 5 and Fig. 6.

Fig. 5 is a diagram illustrating a case where PMI_x is generated so that optimum reception by cooperative communication can be performed when the cooperative base station 1202 performs precoding processing by using PMI_0 in the first embodiment of the present invention.

Fig. 6 is a diagram illustrating a case where the anchor base station 1201 transmits an information data signal having been subjected to precoding processing by using PMI_x and the cooperative base station 1202 transmits an information data signal having been subjected to precoding processing by using PMI_0 in the first embodiment of the present invention. By using the channel state measurement reference signal transmitted from the anchor base station 1201 and the cooperative base station 1202, a mobile terminal 1203 generates precoding control information in the anchor base station 1201 on the assumption that the cooperative base station 1202 has used the fixed precoding matrix (PMI_0). At this time, the precoding control information for the anchor base station 1201 is set as PMI_x. As shown in Fig. 5, the mobile terminal 1203 generates PMI_x so that optimum reception by cooperative communication can be performed when the cooperative base station 1202 performs precoding processing by using PMI_0. The precoding control information (PMI_x) for the anchor base station 1201 is transmitted to the anchor base station 1201.

Next, as shown in Fig. 6, when performing cooperative communication for the mobile terminal 1203, the anchor base station 1201 transmits the information data signal having been subjected to precoding processing by using PMI_x and the cooperative base station 1202 transmits the information data signal having been subjected to precoding processing by using PMI_0.

By using the method explained in the first embodiment, it is no longer necessary for the mobile terminal 1203 to feed back the precoding control information for the cooperative base station 1202 and furthermore, for the anchor base station 1201 to notify the cooperative base station 1202 of the precoding control information for the cooperative base station 1202, and thus the overhead of feedback information can be reduced and at the same time, the processing in a system in which cooperative communication is performed can reduced. Furthermore, as the number of the cooperative base stations 1202 increases, the effect to be obtained is magnified.

In the above explanation, the case will be explained where the mobile terminal 1203 transmits feedback information only to the anchor base station 1201, but even in a case where the mobile terminal 1203 transmits feedback information to each base station, the effect of the present invention can be obtained. That is, it is possible to eliminate precoding control information from feedback information to be transmitted from the mobile terminal 1203 to the cooperative base station 1202.

When there is a plurality of cooperative base stations, it is also possible to make different the precoding matrix to be fixed for each cooperative base station from one another. In that case, for example, it is possible to determine based on the cell ID (number specific to a cell).

As recommended transmission format for a base station, it is possible to add inversion control information for the code of PMI. For example, the mobile terminal feeds back inversion control information for the code of each element of precoding control information together with precoding control information for the anchor base station. It is possible to allocate "1" to the inversion control information when the code is inverted and "0" when not and the inversion control information can be configured by one bit. When receiving information for inverting the code, the anchor base station performs precoding processing on the mobile terminal by using the precoding matrix in which the code of each element of PMI is inverted. Because of this, it is possible to improve the degree of freedom of precoding processing without changing the already determined precoding control information.

In the above explanation, the case will be explained where the channel state measurement reference signal is used when generating feedback information, but it may also be possible to transmit feedback information generated by using a data signal demodulation reference signal. For example, it is possible to generate CQI, RI, CSI, etc., by using a data signal demodulation reference signal.

Furthermore, in the above explanation, the case will be explained where the anchor base station adaptively performs precoding processing and the cooperative base station performs fixed precoding processing, but this is not limited. In addition to the above, it may also be possible for at least one base station of a plurality of base stations that perform cooperative communication for the mobile terminal to perform adaptive precoding processing and for at least one of the base station other than the above to perform fixed precoding processing. Furthermore, it may also be possible to perform the same precoding processing between base stations that perform adaptive precoding processing or perform precoding processing independently of each other. It may also be possible to determine in advance whether the base station at that time is one that adaptively performs precoding processing or one that performs fixedly by the cell ID etc., or for at least one base station to instruct the mobile terminal by notification, informing, etc., or for the mobile terminal to determine. It is preferable to determine precoding processing of a base station that adaptively performs precoding processing so that optimum reception of a signal transmitted from a plurality of base stations that perform cooperative communication can be performed in the mobile terminal when the mobile terminal generates feedback information.

(Second embodiment)

Hereinafter, a second embodiment of the present invention will be explained. A communication system in the second embodiment includes an anchor base station 1401, the cooperative base station 1202 (cooperative relay station 1402), and a mobile terminal 1403, the same as those in the communication system in the first embodiment, but a communication channel between the anchor base station 1401 and the cooperative relay station 1402 is a radio channel, such as a relay. In the following, parts different from those in the first embodiment will be explained mainly.

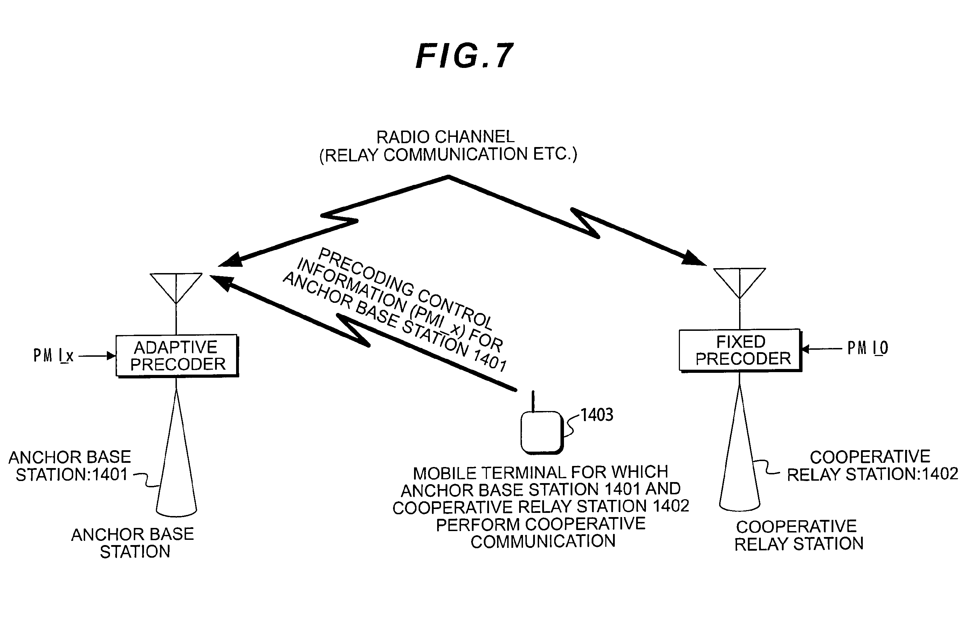

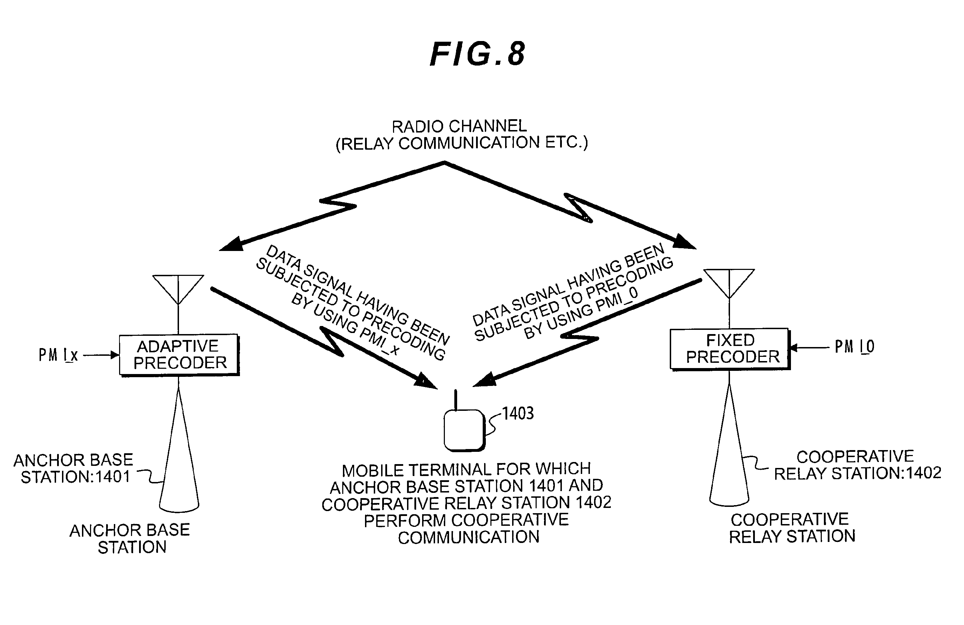

As in the first embodiment, a case will be explained, where the anchor base station 1401 performs adaptive precoding processing by using a fed-back precoding matrix and the cooperative relay station 1402 performs precoding processing by using a fixed precoding matrix as shown in Fig. 7 and Fig. 8.

Fig. 7 is a diagram illustrating a case where PMI_x is generated so that optimum reception by cooperative communication can be performed when the cooperative relay station 1402 performs precoding processing by using PMI_0 in the second embodiment of the present invention.

Fig. 8 is a diagram illustrating a case where the anchor base station 1401 transmits an information data signal having been subjected to precoding processing by using PMI_x and the cooperative relay station 1402 transmits a information data signal having been subjected to precoding processing using PMI_0 in the second embodiment of the present invention. By using the channel state measurement reference signal transmitted from the anchor base station 1401 and the cooperative relay station 1402, the mobile terminal 1203 generates precoding control information in the anchor base station 1401 on the assumption that the cooperative relay station 1402 has used the fixed precoding matrix (PMI_0). At this time, the precoding control information for the anchor base station 1401 is set as PMI_x. As shown in Fig. 7, the mobile terminal 1403 generates PMI_x so that optimum reception by cooperative communication can be performed when the cooperative relay station 1402 performs precoding processing by using PMI_0. The precoding control information (PMI_x) for the anchor base station 1401 is transmitted to the anchor base station 1401.

Next, as shown in Fig. 8, when performing cooperative communication for the mobile terminal 1403, the anchor base station 1401 transmits the information data signal having been subjected to precoding processing by using PMI_x and the cooperative relay station 1402 transmits the information data signal having been subjected to precoding processing by using PMI_0.

By using the method explained in the second embodiment, it is no longer necessary for the mobile terminal 1403 to feed back the precoding control information for the cooperative relay station 1402 by a radio channel and further, for the anchor base station 1401 to notify the cooperative relay station 1402 of the precoding control information for the cooperative relay station 1402, and thus the overhead of feedback information can be reduced and at the same time, the processing in a system in which cooperative communication is performed can be reduced. Furthermore, as the number of the cooperative relay stations 1402 increases, the effect to be obtained is magnified. Moreover, when a radio channel such as a relay is inferior to a wired line such as an optical fiber, in communication capacity and latency, the effect due to the method explained in the second embodiment is further magnified.

The communication channel between the anchor base station 1401 and the cooperative relay station 1402 can be used in various applications in addition to the case where adaptive control information is communicated from the anchor base station 1401 to the cooperative relay station 1402 and for example, it is also possible to communicate relay station information and control information for performing cooperative communication from the cooperative relay station 1402 to the anchor base station 1401.

(Third embodiment)

Hereinafter, a third embodiment of the present invention will be explained. A communication system in the third embodiment includes an anchor base station 1601, a cooperative base station 1602, and a mobile terminal 1603, the same as those in the communication system in the first embodiment, but is different in that the precoding matrices used in precoding processing in the cooperative base station 1602 are switched periodically. In the following, parts different from those in the first embodiment will be explained mainly.

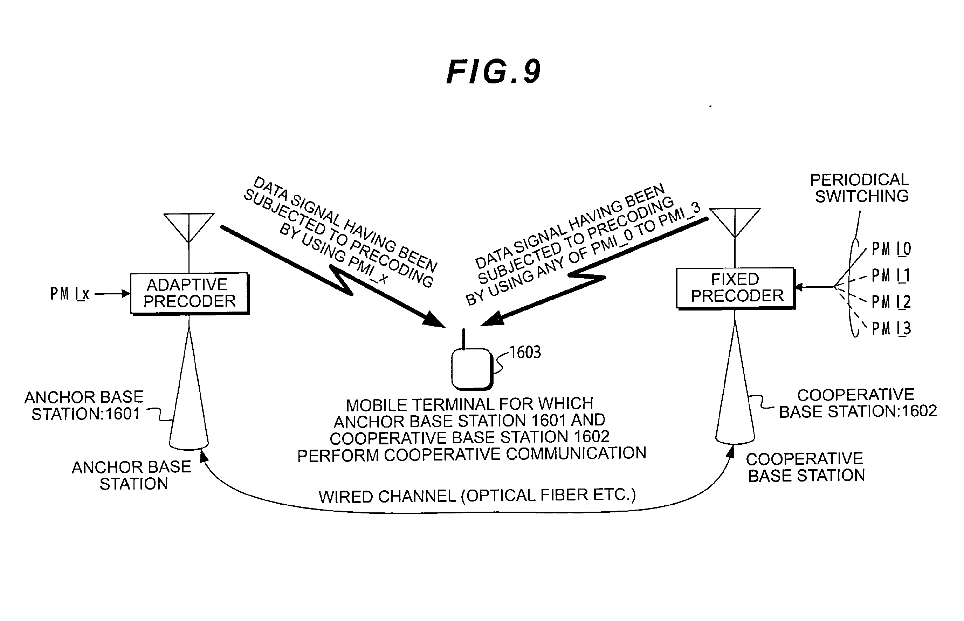

Fig. 9 a diagram illustrating a case where the anchor base station 1601 performs adaptive precoding processing by using a fed-back precoding matrix and the cooperative base station 1602 performs precoding processing by periodically switching a plurality of kinds of fixed precoding matrices in the third embodiment of the present invention. By using the channel state measurement reference signal transmitted from the anchor base station 1601 and the cooperative base station 1602, the mobile terminal 1603 generates precoding control information in the anchor base station 1601 on the assumption that the cooperative base station 1602 performs precoding processing by periodically switching four kinds of fixed precoding matrices (PMI_0 to PMI_3) in the direction of time and the direction of frequency.

Here, as a periodic switching method of the cooperative base station 1602, various method can be used.

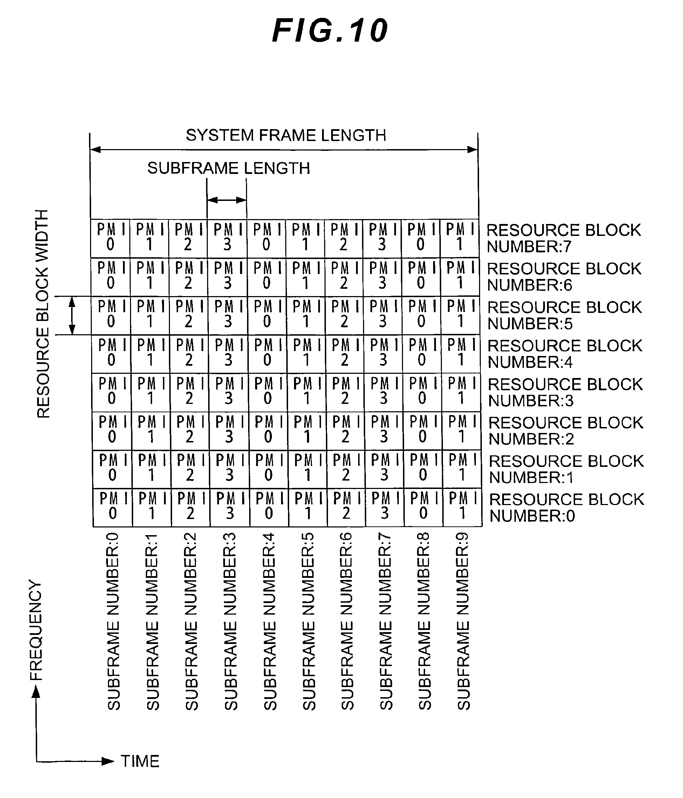

Fig. 10 is a diagram illustrating an example of a periodical switching method, in which the cooperative base station 1602 switches precoding matrices for each subframe, in the third embodiment of the present invention. This can be realized by specifying in advance and determining uniquely a precoding matrix to be used, through the use of a subframe number.

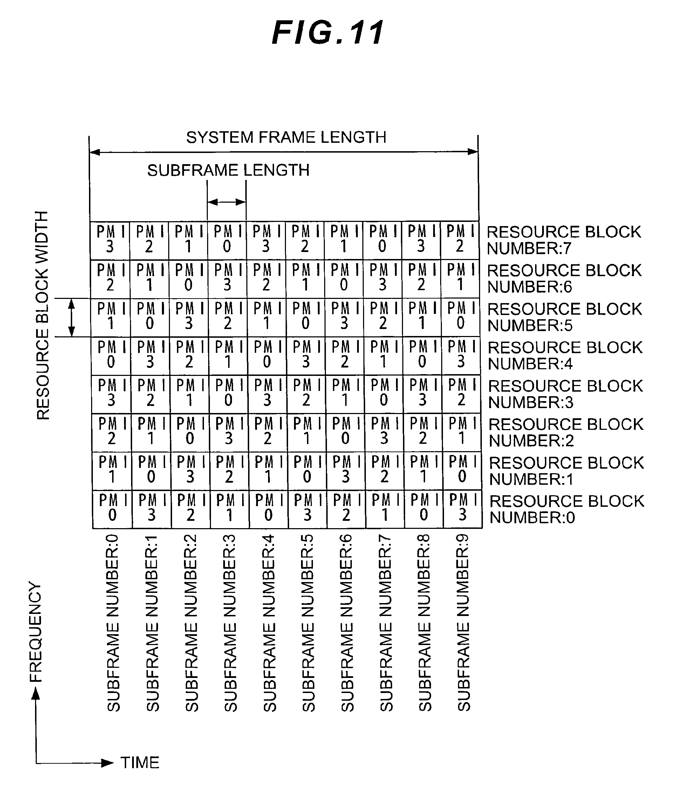

Fig. 11 is a diagram illustrating an example of a periodical switching method, in which the cooperative base station 1602 switches precoding matrices for each subframe and for each resource block, in the third embodiment of the present invention. This can be realized by specifying in advance a precoding matrix to be used by a subframe number and a resource block number and determine uniquely.

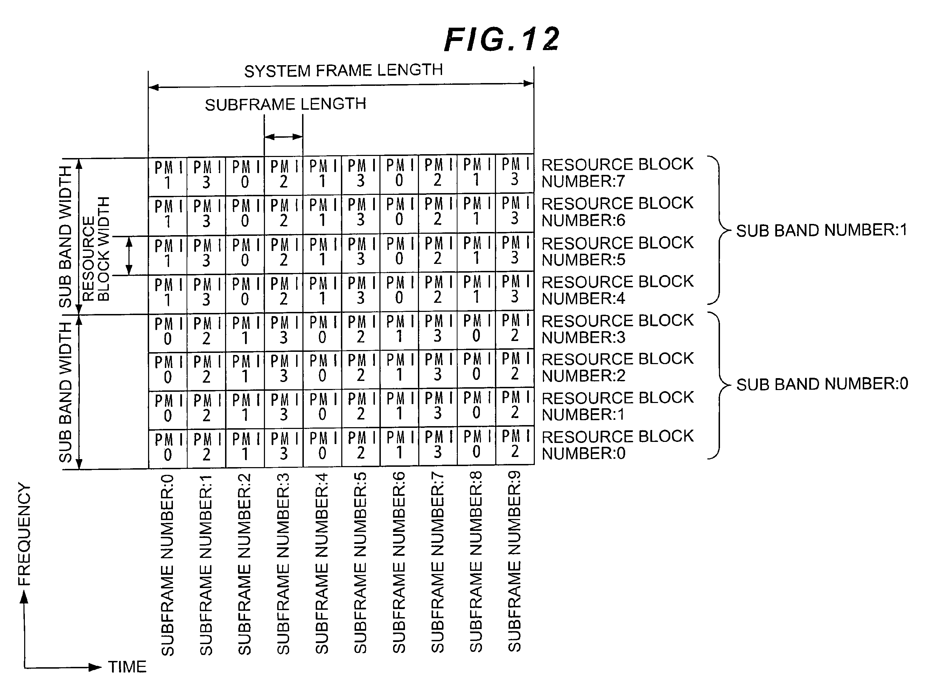

Fig. 12 is a diagram illustrating an example of a periodical switching method, in which the cooperative base station 1602 switches precoding matrices for each subframe and for each sub band, in the third embodiment of the present invention. This can be realized by specifying in advance a precoding matrix to be used by a subframe number and a sub band number and determine uniquely. Here, the sub band is a unit in the direction of frequency with which feedback information is generated and can be configured by a plurality of resource blocks.

Precoding control information for the anchor base station 1601 is set as PMI_x. The mobile terminal 1603 generates PMI_x through the use of any of PMI_0 PMI_3 switched periodically by using a method specified in advance so that optimum reception by cooperative communication can be performed when the cooperative base station 1602 performs precoding processing. The generated precoding control information (PMI_x) for the anchor base station 1601 is transmitted to the anchor base station 1601. Next, as shown in Fig. 9, when performing cooperative communication for the mobile terminal 1603, the anchor base station 1601 transmits an information data signal having been subjected to precoding processing by using PMI_x and the cooperative base station 1602 transmits an information data signal having been subjected to precoding processing by using any of PMI_0 to PMI_3 switched periodically through the use of a method specified in advance.

By using the method explained in the third embodiment, it is no longer necessary for the mobile terminal 1603 to feed back the precoding control information for the cooperative relay station 1602 and further, for the anchor base station 1601 to notify the cooperative base station 1602 of the precoding control information for the cooperative base station 1602, and thus the overhead of feedback information can be reduced and at the same time, the processing in a system in which cooperative communication is performed can be reduced. Furthermore, as the number of the cooperative base stations 1602 increases, the effect to be obtained is magnified. Moreover, the precoding matrices used in the cooperative base station 1602 are switched periodically, and thus it is possible for the mobile terminal 1603 to further maintain reception performance.

As a method for periodically switching precoding matrices used by the cooperative base station 1602, in addition to the method already explained, it may also be possible to switch precoding matrices for each system frame, slot, resource element, component carrier, transmission antenna port, and layer. Furthermore, when a plurality of the cooperative base stations 1602 exists, it may also be possible to further switch precoding matrices for each of the cooperative base stations 1602. Meanwhile, it is possible to apply the method explained in the third embodiment in combination with the method explained in the second embodiment.

As a method for specifying a timing to switch and a precoding matrix, in addition to the method in which the timing and the precoding matrix uniform in the system are specified in advance, it is possible to use a method in which only a relationship between the number of a frame or subframe and a timing to switch or a precoding matrix is specified in advance, a method for notifying the mobile terminal 1603 of a timing to switch and a precoding matrix from the anchor base station 1601 or the number of frame or sub frame (or information about a difference from the number in the anchor base station) of the cooperative base station 1602 via a control channel (also including signaling in the upper layer, such as RRC (Radio Resource Control) signaling) when starting cooperative communication, a method for notifying a plurality of the mobile terminals 1603, etc.

(Fourth embodiment)

(Hereinafter, a fourth embodiment of the present invention will be explained. A communication system in the fourth embodiment includes an anchor base station 801, a cooperative base station 802, and a mobile terminal 803, the same as those in the already existing communication systems, but is different in that by reducing the frequency of update of a precoding matrix used in precoding processing in the cooperative base station 802 lower than that in the anchor base station 801, precoding processing by the cooperative base station 802 is quasi-fixed. In the following, parts different from those in the already existing communication systems will be explained mainly.

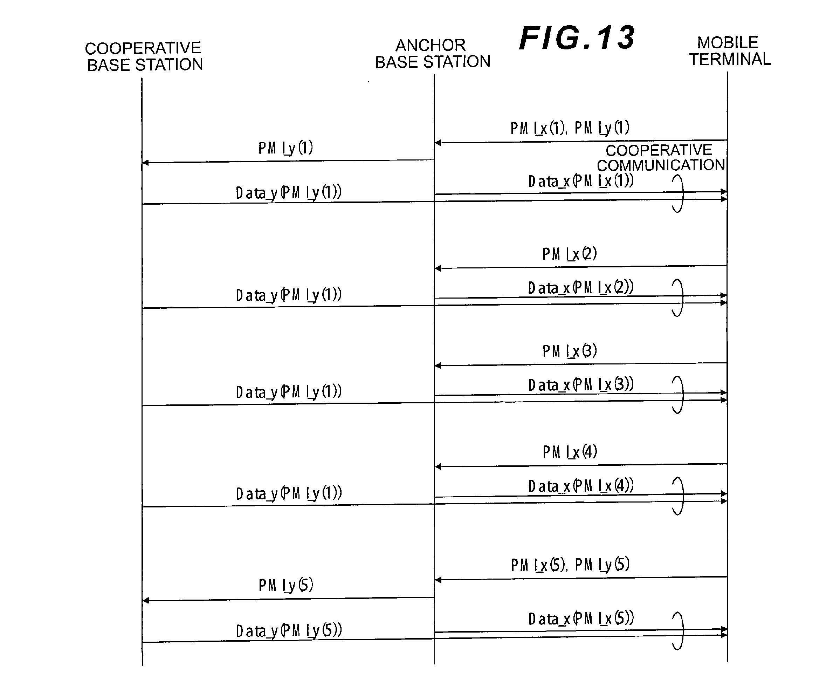

Fig. 13 shows an example of a flowchart of precoding control information and an information data signal used in the fourth embodiment of the present invention. In Fig. 13, the flow of signals in the anchor base station 801, the cooperative base station 802, and the mobile terminal 803 are shown, respectively. PMI_x represents precoding control information for the anchor base station 801, PMI_y represents precoding control information for the cooperative base station 802, and the figures within the brackets indicate the order of communication. Furthermore, Data_x (PMI_x) represents an information data signal having been subjected to precoding processing by using PMI_x in the anchor base station 801 and Data_y (PMI_y) represents an information data signal having been subjected to precoding processing by using PMI_y in the cooperative base station 802.

In the example in Fig. 13, a case will be explained where each time the mobile terminal 803 transmits PMI_x four times, PMI_y is transmitted once, that is, the frequency of update of precoding control information for the cooperative base station 802 is reduced to one quarter of the frequency of update of precoding control information for the anchor base station 801. It is possible to arbitrarily set the frequency of update of precoding control information for the cooperative base station 802.

In the first communication, as shown in Fig. 19, the mobile terminal 803 feeds back PMI_x(1) and PMI_y(1) for the anchor base station 801. At this time, the mobile terminal 803 determines PMI_x(1) and PMI_y(1) so that optimum reception can be performed when cooperative communication is performed. The anchor base station 801 notifies the cooperative base station 802 of PMI_y(1). As shown in Fig. 20, the anchor base station 801 and the cooperative base station 802 cooperatively communicate Data_x (PMI_x(1)) and Data_y (PMI_y(1)), respectively, for the mobile terminal 803.

In the second communication, the mobile terminal 803 feeds back PMI_x(2) for the anchor base station. At this time, the mobile terminal 803 determines PMI_x(2) on the assumption that the cooperative base station 802 performs precoding processing by using PMI_x(1) so that optimum reception can be performed when cooperative communication is performed. The anchor base station 801 and the cooperative base station 802 cooperatively communicate Data_x (PMI_x(2)) and Data_x (PMI_x(1)) for the mobile terminal 803, respectively. That is, precoding processing in the cooperative base station 802 is performed based on precoding control information fed back in the first communication. In the third and fourth communications, the same is performed as in the second communication.

In the fifth communication, as shown in Fig. 19, the mobile terminal 803 feeds back PMI_x(5) and PMI_y(5) for the anchor base station 801. At this time, the mobile terminal 803 determines PMI_x(5) and PMI_y(5) so that optimum reception can be performed when cooperative communication is performed. The anchor base station 801 notifies the cooperative base station 802 of PMI_y(5). As shown in Fig. 20, the anchor base station 801 and the cooperative base station 802 cooperatively communicate Data_x (PMI_x(5)) and Data_y (PMI_y(5)), respectively, for the mobile terminal 803. In the sixth and subsequent communications also, the same processing is performed.

By using the method explained in the fourth embodiment, it is possible for the mobile terminal 803 to reduce the frequency of feedback of the precoding control information for the cooperative base station 802 and furthermore, for the anchor base station 801 to reduce the frequency of notification of the precoding control information for the cooperative base station 802 to the cooperative base station 802, and thus the overhead of feedback information can be reduced and at the same time, the processing in a system in which cooperative communication is performed can be reduced. Furthermore, it is possible for the mobile terminal 803 to maintain reception performance by quasi-fixing precoding processing in the cooperative base stations 802. Moreover, as the number of the cooperative base stations 802 increases, the effect to be obtained is magnified.

When updating precoding control information in the cooperative base station 802, that is, in the example in Fig. 13, at the time of the first and fifth communications, it is also possible for a mobile terminal 1003 to generate precoding control information (PMI_z) common to an anchor base station 1001 and a cooperative base station 1002 and feed back it as shown in Fig. 21. In that case, at the time of the second to fourth communications, it is preferable for the mobile terminal 1003 to generate precoding control information for the anchor base station 1001 on the assumption that precoding control information of the cooperative base station uses PMI_z.

Although the case will be explained where PMI_x is also transmitted at the same timing at which PMI_y is transmitted from the mobile terminal 803, this is not limited and even in a case where PMI_x is not transmitted at the timing at which PMI_y is transmitted, it is possible to obtain the same effect by reducing the frequency of feedback of PMI_y lower than the frequency of feedback of PMI_x.

PMI_y may be precoding control information indicative of a precoding matrix by itself alone or precoding control information capable of specifying a precoding matrix in combination with PMI_x.

Furthermore, the case will be explained where the anchor base station 801 notifies the cooperative base station 802 of the precoding control information reported from the mobile terminal 803 to the anchor base station 801, but this is not limited. For example, it is possible to obtain the same effect in a configuration in which the anchor base station 801 and the cooperative base station 802 share information about precoding and the frequency of feedback from the mobile terminal 803 to the anchor base station 801 is different, such as a configuration in which the anchor base station 801 processes (coding, reselection of a precoding matrix, etc., are included) precoding control information reported from the mobile terminal 803 to the anchor base station 801 and notifies the cooperative base station 802 of the processed control information, and the cooperative base station 802 acquires information about precoding from the processed control information.

In the above explanation, the case will be explained where update of precoding control information in the cooperative base station 802 is performed periodically, but it may also be possible to perform update based on an instruction to the mobile terminal 803 from the anchor base station 801.

Furthermore, in the above explanation, the case will be explained where the overhead of feedback information is reduced by reducing the frequency of update of precoding control information in the cooperative base station 802, but this is not limited. For example, it is also possible to realize the reduction by reducing the amount of data of precoding control information in the cooperative base station 802 smaller than the amount of data of precoding control information in the anchor base station 801. As a method for reducing the amount of data, it is possible to use a method for increasing the units with which precoding control information is generated, a method for limiting the range of generation, a method for transmitting precoding control information at a plurality of timings by dividing the precoding control information into pieces, etc. Furthermore, it is also possible to realize the reduction by reducing the number of kinds of PMI.

It is possible to apply the method explained in the fourth embodiment in combination with the method explained in the second or third embodiment.

(Fifth embodiment)

Hereinafter, a fifth embodiment of the present invention will be explained. A communication system in the fifth embodiment includes the same anchor base station, the cooperative base station, and the mobile terminal as those in the communication system in the first embodiment, but a difference lies in the fact that the mobile terminal feeds back information based on the channel state of the anchor base station and the cooperative base station (CSI, channel state information) to the anchor base station as feedback information. In the following, parts different from those in the first embodiment will be explained mainly.

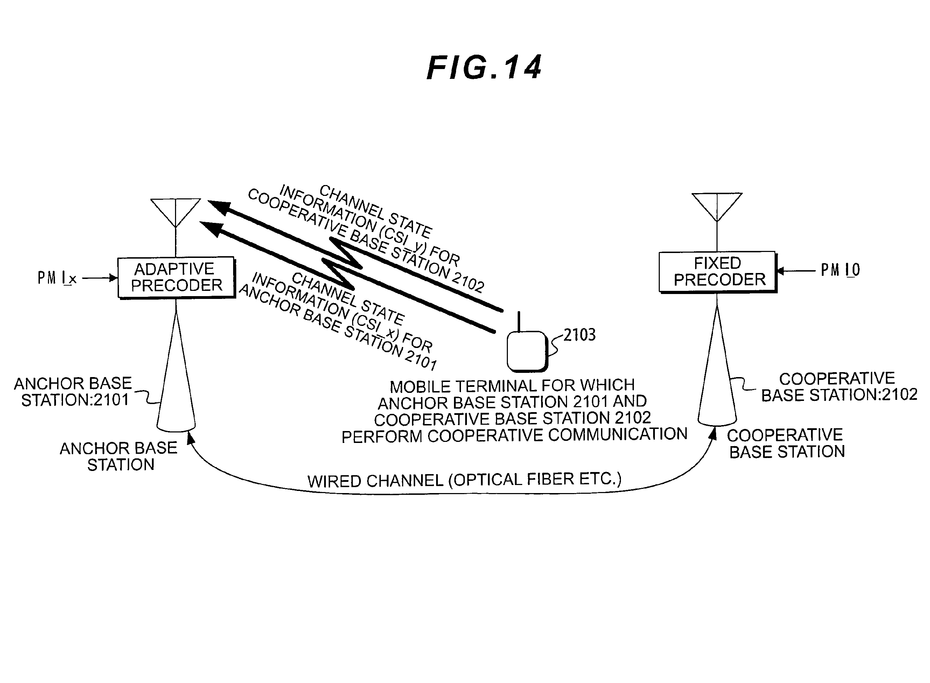

Fig. 14 a diagram illustrating a case where a mobile terminal 2103 feeds back first channel state information (CSI_x) and second channel state information (CSI_y) to an anchor base station 2101 in the fifth embodiment of the present invention.

As shown in Fig. 14, in the fifth embodiment of the present invention, the mobile terminal 2103 generates the first channel state information (CSI_x) for the anchor base station 2101 and the second channel state information (CSI_y) for a cooperative base station 2102, respectively through the use of the first channel state measurement reference signal and the second channel state measurement reference signal and feeds back them to the anchor base station 2101. Here, the channel state information (CSI) is information based on a channel state estimation value (amplitude / phase variation values, frequency response) between the anchor base station 2101 and the mobile terminal 2103 and may be the channel state estimation value itself. Furthermore, it is possible to perform compression processing on the channel state estimation value by using various compression methods and reduce the amount of feedback information. For example, it may also be possible to set a difference in channel states contiguous in the direction of time or the direction of frequency as CSI. Moreover, it may also be possible to find CSI for each resource determined in advance, such as a sub band.

The anchor base station 2101 determines a precoding matrix (PMI_x) used in the anchor base station 2101 based on the fed-back CSI and at this time, determines a precoding matrix used in the anchor base station 2101 on the assumption that the cooperative base station 2102 has used a fixed precoding matrix (PMI_0). That is, the anchor base station 2101 generates PMI_x so that cooperative communication can be performed when the cooperative base station 2102 performs precoding processing by using PMI_0. Furthermore, the anchor base station 2101 determines CQI and RI for the mobile terminal 2103 based on the fed-back CSI.

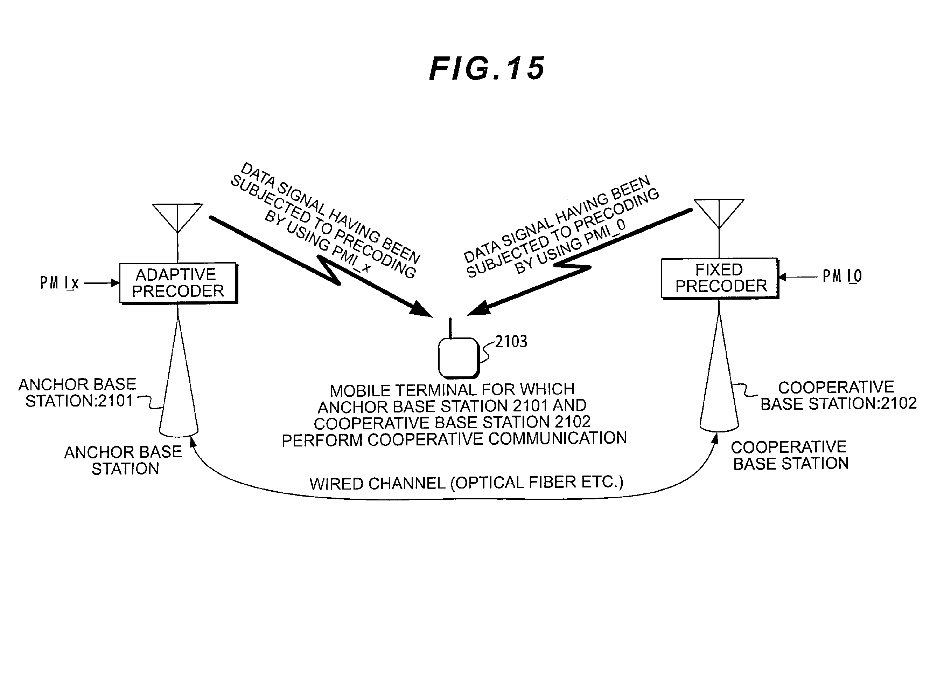

Fig. 15 is a diagram illustrating a case where the anchor base station 2101 transmits an information data signal having been subjected to precoding processing by using PMI_x and the cooperative base station 2102 transmits an information data signal having been subjected to precoding processing by using PMI_0 in the fifth embodiment of the present invention.

By using the method explained in the fifth embodiment, it is no longer necessary for the anchor base station 2101 to notify the cooperative base station 2102 of the precoding control information for the cooperative base station 2102, and thus the overhead of a signal for performing cooperative communication between base stations can be reduced and at the same time, the processing in a system in which cooperative communication is performed can be reduced. Furthermore, as the number of the cooperative base stations 2102 increases, the effect to be obtained is magnified.

Meanwhile, in each of the embodiments, the case has been explained where the anchor base station and the cooperative base station perform communication in cooperation with each other. The base station referred to here may, of course, be a physical base station apparatus in a cellular system, but in addition to the above, it is possible to use a combination (first transmission apparatus and second transmission apparatus) of transmission apparatuses (including relay apparatus) that cooperate with each other while covering cells, respectively, or a combination of transmission apparatuses that cooperate with each other while transmitting channel state measurement reference signals from antennal ports (first port and second port) different from each other as an anchor base station and a cooperative base station and the same effect as that in each of the embodiments can be obtained. For example, it is possible for an anchor base station to be a base station apparatus in a cellular system and for a cooperative base station to be a transmission apparatus (for example, RRU (Remote Radio Unit), RRE (Remote Radio Equipment), Distributed antenna) that operates by being controlled by an anchor base station, or conversely, it is also possible for a cooperative base station to be a base station apparatus in a cellular system and for an anchor base station to be a transmission apparatus that operates by being controlled by a cooperative base station. Furthermore, it may also be possible for both the anchor base station and the cooperative base station to be transmission apparatuses that operate by being controlled by a physical base station apparatus in a cellular system.

Explanations of Letters or Numerals

101, 102, 200 base station
103, 210, 700, 803, 1003, 1203, 1403, 1603, 2103 mobile terminal
400, 801, 1001, 1201, 1401, 1601, 2101 anchor base station
409 first channel state measurement reference signal generation section
609 second channel state measurement reference signal generation section
412, 710 feedback information processing section 600, 802, 1002, 1202, 1602, 2102 cooperative base station
1402 cooperative relay station

**Claims**

1.  A communication system comprising a first communication apparatus (400) to adaptively perform precoding processing, at least one second communication apparatus (600) to fixedly perform precoding processing, and at least one third communication apparatus (700) to perform cooperative communication between said first communication apparatus (400) and said second communication apparatus (600).

2.  The communication system according to claim 1, wherein
    said first communication apparatus (400) comprises:

    a first channel state measurement reference signal generation section (409) to generate a first channel state measurement reference signal for measuring a first channel state of the channel between said first communication apparatus (400) and said third communication apparatus (700);
    a feedback information processing section (412) to determine precoding processing for a data signal to be transmitted to said third communication apparatus (700) based on feedback information acquired from said third communication apparatus (700); and

a first precoding section (405) to adaptively perform precoding processing on a data signal based on precoding processing determined by said feedback information processing section (412),

said second communication apparatus (600) comprises:

a second channel state measurement reference signal generation section (609) to generate a second channel state measurement reference signal for measuring a second channel state of the channel between said second communication apparatus (600) and said third communication apparatus (700); and

a second precoding section (605) to perform precoding processing specified in advance for a data signal to be transmitted to said third communication apparatus (700),

said third communication apparatus (700) comprises a feedback information generation section (710) to generate feedback information based on said first channel state and said second channel state measured by using said first channel state measurement reference signal and said second channel state measurement reference signal, and

said third communication apparatus (700) transmits said feedback information to said first communication apparatus (400), and said first communication apparatus (400) and said second communication apparatus (600) respectively transmit a data signal having been subjected to precoding processing to said third communication apparatus (700), and thus cooperative communication is performed.

3. The communication system according to claim 2, wherein
said second precoding section (605) performs precoding processing by switching to any one of a plurality of pieces of precoding processing specified in advance.

4. The communication system according to claim 2 or claim 3, wherein
said feedback information generation section (710) generates precoding control information for controlling precoding processing performed by said first precoding section (405).

5. The communication system according to any of claim 2 to claim 4, wherein
said feedback information generation section (710) determines precoding processing performed by said first precoding section (405) so that precoding processing performed by said second precoding section (605) becomes optimal.

6. The communication system according to any of claim 2 to claim 5, wherein
said feedback information generation section (710) determines precoding processing performed by said first precoding section (405) so that the reception state of said information data signal becomes optimal, which is to be transmitted to said third communication apparatus (700) by said first communication apparatus (400) and said second communication apparatus (600) in cooperation with each other.

7. The communication system according to claim 2 or claim 3, wherein
said feedback information generation section (710) generates first channel state information, which is information based on said first channel state, and second channel state information, which is information based on said second channel state, and
said feedback information processing section (412) determines precoding processing performed by said first precoding section (405) based on said first channel state information, said second channel state information, and precoding processing performed by said second precoding section (605).

8. A communication system comprising a first communication apparatus (400), at least one second communication apparatus (600), and at least one third communication apparatus (700) to perform cooperative communication between said first communication apparatus (400) and said second communication apparatus (600), wherein
said first communication apparatus (400) comprises:

a first channel state measurement reference signal generation section (409) to generate a first channel state measurement reference signal for measuring a first channel state of the channel between said first communication apparatus (400) and said third communication apparatus (700);
a feedback information processing section (412) to determine precoding processing for a data signal to be transmitted to said third communication apparatus (700) based on feedback information acquired from said third communication apparatus (700); and
a first precoding section (405) to adaptively perform precoding processing on a data signal based on precoding processing determined by said feedback information processing section (412),

said second communication apparatus (600) comprises:

a second channel state measurement reference signal generation section (609) to generate a second channel state measurement reference signal for measuring a second channel state of the channel between said second communication apparatus (600) and said third communication apparatus (700); and
a second precoding section (605) to update a precoding matrix with a frequency lower than an update frequency of the precoding matrix in the first precoding section (405) and perform precoding processing on a data signal to be transmitted to said third communication apparatus (700),

said third communication apparatus (700) comprises a feedback information generation section (710) to generate feedback information based on said first channel state and said second channel state measured by using said first channel state measurement reference signal and said second channel state measurement reference signal, and said third communication apparatus (700) transmits said feedback information to said first communication apparatus (400), and said first communication apparatus (400) and said second communication apparatus (600) respectively transmit a data signal having been subjected to precoding processing to said third precoding processing, and thus cooperative communication is performed.

9. A communication system in which data is transmitted from a transmission apparatus comprising a first port and a second port to a reception apparatus, wherein
said transmission apparatus (400,600) comprises:

a first channel state measurement reference signal generation section (409) to generate a first channel state measurement reference signal for measuring a first channel state between said first port and said reception apparatus;
a second channel state measurement reference signal generation section (609) to generate a second channel state measurement reference signal for measuring a second channel state between said second port and said reception apparatus;
a feedback information processing section (412) to determine precoding processing for a data signal to be transmitted to said reception apparatus based on feedback information acquired from said reception apparatus; and
a precoding section (405,605) to adaptively perform precoding processing on a data signal to be transmitted from said first port and said second port based on precoding processing determined by said feedback information processing section (412), and

said reception apparatus (700) comprises a feedback information generation section (710) to generate feedback information including one of precoding processing information for said first port and precoding processing information for said second port based on said first channel state and said second channel state measured by using said first channel state measurement reference signal and said second channel state measurement reference signal.

10. The communication system according to claim 9, wherein
the frequency with which said feedback information includes precoding processing information for said first port is higher than the frequency with which said feedback information includes precoding processing information for said second port.

11. The communication system according to claim 10, wherein
precoding processing information for said first port is generated by further referring to precoding processing information for said second port generated before the generation thereof.

12. The communication system according to claim 10, wherein
precoding processing information for said second port is generated by further referring to precoding processing information for said first port generated before the generation thereof.

13. A communication apparatus (400) applied to a communication system including a first communication apparatus (400) to adaptively perform precoding processing, at least one second communication apparatus (600) to fixedly perform precoding processing, and at least one third communication apparatus (700) to perform cooperative communication between said first communication apparatus (400) and said second communication apparatus (600), said communication apparatus comprising:

a first channel state measurement reference signal generation section (409) to generate a first channel state measurement reference signal for measuring a first channel state of the channel between said first communication apparatus (400) and said third communication apparatus (700);
a feedback information processing section (412) to determine precoding processing for a data signal to be transmitted to said third communication apparatus (700) based on feedback information acquired from said third communication apparatus (700); and
a first precoding section (405) to adaptively perform precoding processing on a data signal based on precoding processing determined by said feedback information processing section (412).

14. A communication apparatus (600) applied to a communication system including a first communication apparatus (400) to adaptively perform precoding processing, at least one second communication apparatus (600) to fixedly perform precoding processing, and at least one third communication apparatus (700) to perform cooperative communication between said first communication apparatus (400) and said second communication apparatus (600), said communication apparatus comprising:

a second channel state measurement reference signal generation section (609) to generate a second channel state measurement reference signal for measuring a second channel state of the channel between said second communication apparatus (600) and said third communication apparatus (700); and
a second precoding section (605) to perform precoding processing specified in advance on a data signal to be transmitted to said third communication apparatus (700).

15. A communication apparatus (700) applied to a communication system including a first communication apparatus (400) to adaptively perform precoding processing, at least one second communication apparatus (600) to fixedly perform precoding processing, and at least one third communication apparatus (700) to perform cooperative communication between said first communication apparatus (400) and said second communication apparatus (600), said communication apparatus comprising:

a feedback information generation section (710) to generate feedback information based on said first channel state and said second channel state measured by using a first channel state measurement reference signal for measuring a first channel state of the channel between said first communication apparatus (400) and the communication apparatus and a second channel state measurement reference signal for measuring a second channel state of the channel between said second communication apparatus (600) and said third communication apparatus (700), wherein
said feedback information is transmitted to said first communication apparatus (400) and a data signal having been subjected to precoding processing is received from said first communication apparatus (400) and said second communication apparatus (600), respectively.

16. A communication method in a communication system including a first communication apparatus (400), at least one second communication apparatus (600), and at least one third communication apparatus (700) to perform cooperative communication between said first communication apparatus (400) and said second communication apparatus (600), said communication method comprising:

in said first communication apparatus (400), the steps of:

generating a first channel state measurement reference signal for measuring a first channel state of the channel between said first communication apparatus (400) and said third communication apparatus (700):

determining precoding processing for a data signal to be transmitted to said third communication apparatus (700) based on feedback information acquired from said third communication apparatus (700); and
adaptively performing precoding processing on a data signal based on said determined precoding processing;

in said second communication apparatus (600), the steps of:

generating a second channel state measurement reference signal for measuring a second channel state of the channel between said second communication apparatus (600) and said third communication apparatus (700); and
performing precoding processing specified in advance on a data signal to be transmitted to said third communication apparatus (700); and

in said third communication apparatus (700), the step of:

generating feedback information based on said first channel state and said second channel state measured by using said first channel state measurement reference signal and said second channel state measurement reference signal, wherein

said third communication apparatus (700) transmits said feedback information to said first communication apparatus (400), and said first communication apparatus (400) and said second communication apparatus (600), respectively, transmit a data signal having been subjected to precoding processing to said third communication apparatus (700), and thus cooperative communication is performed.

**17.** A communication method of a first communication apparatus (400) applied to a communication system including a first communication apparatus (400) to adaptively perform precoding processing, at least one second communication apparatus (600) to fixedly perform precoding processing, and at least one third communication apparatus (700) to perform cooperative communication between said first communication apparatus (400) and said second communication apparatus (600), said communication method comprising the steps of:

generating a first channel state measurement reference signal for measuring a first channel state of the channel between said first communication apparatus (400) and said third communication apparatus (700);
determining precoding processing for a data signal to be transmitted to said third communication system based on feedback information acquired from said third communication apparatus (700); and
adaptively performing precoding processing on a data signal based on said determined precoding processing.

**18.** A communication method of a second communication apparatus (600) applied to a communication system including a first communication apparatus (400) to adaptively perform precoding processing, at least one second communication apparatus (600) to fixedly perform precoding processing, and at least one third communication apparatus (700) to perform cooperative communication between said first communication apparatus (400) and said second communication apparatus (600), said communication method comprising the steps of:

generating a second channel state measurement reference signal for measuring a second channel state of the channel between said second communication apparatus (600) and said third communication apparatus (700); and
performing precoding processing specified in advance on a data signal to be transmitted to said third communication apparatus (700).

**19.** A communication method of a third communication apparatus (700) applied to a communication system including a first communication apparatus (400) to adaptively perform precoding processing, at least one second communication apparatus (600) to fixedly perform precoding processing, and at least one third communication apparatus (700) to perform cooperative communication between said first communication apparatus (400) and said second communication apparatus (600), said communication method comprising the steps of:

generating feedback information based on said first channel state and said second channel state measured by using a first channel state measurement reference signal for measuring a first channel state of the channel between said third communication apparatus (700) and said first communication apparatus (400) and a second channel state measurement reference signal for measuring a second channel state of the channel between said third communication apparatus (700) and said second communication apparatus (600);
transmitting said feedback information to said first communication apparatus (400); and
receiving a data signal having been subjected to precoding processing from said first communication apparatus (400) and said second communication apparatus (600), respectively.

## FIG.1

ANCHOR BASE STATION                                                                      400

NUMBER OF CODE WORDS

413 — DATA SIGNAL DEMODULATION REFERENCE SIGNAL GENERATION SECTION

409 — FIRST CHANNEL STATE MEASUREMENT REFERENCE SIGNAL GENERATION SECTION

NUMBER OF TRANSMISSION ANTENNAS

401 CODING SECTION → 402 SCRAMBLE SECTION → 403 MODULATION SECTION → 404 LAYER MAPPING SECTION → 405 ADAPTIVE PRE-CODING SECTION → 406 RESOURCE ELEMENT MAPPING SECTION → 407 OFDM SIGNAL GENERATION SECTION → 408 TRANSMISSION ANTENNA

401 CODING SECTION → 402 SCRAMBLE SECTION → 403 MODULATION SECTION → 404 LAYER MAPPING SECTION → 405 ADAPTIVE PRE-CODING SECTION → 406 RESOURCE ELEMENT MAPPING SECTION → 407 OFDM SIGNAL GENERATION SECTION → 408 TRANSMISSION ANTENNA

NUMBER OF LAYERS

412 FEEDBACK INFORMATION PROCESSING SECTION ← 411 RECEIVED SIGNAL PROCESSING SECTION ← 410 RECEPTION ANTENNA

ADAPTIVE CONTROL INFORMATION ETC. TO COOPERATIVE BASE STATION

EP 2 445 253 A1

# FIG.2

CHANNEL STATE MEASUREMENT REFERENCE SIGNAL (ANTENNA PORT 0)

CHANNEL STATE MEASUREMENT REFERENCE SIGNAL (ANTENNA PORT 1)

CHANNEL STATE MEASUREMENT REFERENCE SIGNAL (ANTENNA PORT 2)

CHANNEL STATE MEASUREMENT REFERENCE SIGNAL (ANTENNA PORT 3)

DATA SIGNAL DEMODULATION REFERENCE SIGNAL (LAYER NUMBER 0)

DATA SIGNAL DEMODULATION REFERENCE SIGNAL (LAYER NUMBER 1)

INFORMATION DATA SIGNAL OR CONTROL INFORMATION SIGNAL (MAXIMUM NUMBER OF LAYERS IS 2)

# FIG.3

COOPERATIVE BASE STATION                                                                                600

NUMBER OF
CODE WORDS

NUMBER OF
TRANSMISSION
ANTENNAS

613 — DATA SIGNAL DEMODULATION REFERENCE SIGNAL GENERATION SECTION

609 — SECOND CHANNEL STATE MEASUREMENT REFERENCE SIGNAL GENERATION SECTION

| 601 CODING SECTION | 602 SCRAMBLE SECTION | 603 MODU-LATION SECTION | 604 LAYER MAPPING SECTION | 605 FIXED PRE-CODING SECTION | 606 RESOURCE ELEMENT MAPPING SECTION | 607 OFDM SIGNAL GENERATION SECTION | 608 TRANS-MISSION ANTENNA |

| 601 CODING SECTION | 602 SCRAMBLE SECTION | 603 MODU-LATION SECTION | | | 606 RESOURCE ELEMENT MAPPING SECTION | 607 OFDM SIGNAL GENERATION SECTION | 608 TRANS-MISSION ANTENNA |

NUMBER OF
LAYERS

ADAPTIVE CONTROL
INFORMATION ETC. FROM
ANCHOR BASE STATION

EP 2 445 253 A1

## FIG.4

MOBILE TERMINAL

NUMBER OF RECEPTION ANTENNAS

NUMBER OF LAYERS

NUMBER OF CODE WORDS

701 RECEPTION ANTENNA → 702 OFDM SIGNAL DEMODULATION SECTION → 703 RESOURCE ELEMENT DEMAPPING SECTION

701 RECEPTION ANTENNA → 702 OFDM SIGNAL DEMODULATION SECTION → 703 RESOURCE ELEMENT DEMAPPING SECTION

704 FILTER SECTION

705 LAYER DEMAPPING SECTION

706 DEMODULATION SECTION → 707 DESCRAMBLE SECTION → 708 DECODING SECTION

706 DEMODULATION SECTION → 707 DESCRAMBLE SECTION → 708 DECODING SECTION

CHANNEL STATE MEASUREMENT REFERENCE SIGNAL

DATA SIGNAL DEMODULATION REFERENCE SIGNAL

TRANSMISSION ANTENNA 712 ← TRANSMISSION SIGNAL GENERATION SECTION 711 ← FEEDBACK INFORMATION GENERATION SECTION 710

CHANNEL ESTIMATION SECTION 709

700

EP 2 445 253 A1

# FIG.5

PRECODING CONTROL INFORMATION (PMI_x) FOR ANCHOR BASE STATION 1201

PM I_x → ADAPTIVE PRECODER

FIXED PRECODER ← PM I_0

ANCHOR BASE STATION:1201

1203

MOBILE TERMINAL FOR WHICH ANCHOR BASE STATION 1201 AND COOPERATIVE BASE STATION 1202 PERFORM COOPERATIVE COMMUNICATION

COOPERATIVE BASE STATION:1202

ANCHOR BASE STATION

COOPERATIVE BASE STATION

WIRED CHANNEL (OPTICAL FIBER ETC.)

EP 2 445 253 A1

# FIG.6

ADAPTIVE PRECODER ← PM I_x

DATA SIGNAL HAVING BEEN SUBJECTED TO PRECODING BY USING PMI_x

DATA SIGNAL HAVING BEEN SUBJECTED TO PRECODING BY USING PMI_0

FIXED PRECODER ← PM I_0

—1203

ANCHOR BASE STATION:1201

ANCHOR BASE STATION

MOBILE TERMINAL FOR WHICH ANCHOR BASE STATION 1201 AND COOPERATIVE BASE STATION 1202 PERFORM COOPERATIVE COMMUNICATION

COOPERATIVE BASE STATION:1202

COOPERATIVE BASE STATION

WIRED CHANNEL (OPTICAL FIBER ETC.)

EP 2 445 253 A1

# FIG.7

RADIO CHANNEL
(RELAY COMMUNICATION ETC.)

PRECODING CONTROL
INFORMATION (PMI_x) FOR
ANCHOR BASE STATION 1401

PM Lx → ADAPTIVE
PRECODER

FIXED
PRECODER ← PM L0

ANCHOR BASE
STATION:1401

1403

MOBILE TERMINAL FOR WHICH
ANCHOR BASE STATION 1401 AND
COOPERATIVE RELAY STATION 1402
PERFORM COOPERATIVE
COMMUNICATION

COOPERATIVE
RELAY STATION:1402

ANCHOR BASE
STATION

COOPERATIVE
RELAY STATION

EP 2 445 253 A1

# FIG.8

RADIO CHANNEL
(RELAY COMMUNICATION ETC.)

DATA SIGNAL HAVING BEEN
SUBJECTED TO PRECODING
BY USING PMI_x

DATA SIGNAL HAVING BEEN
SUBJECTED TO PRECODING
BY USING PMI_0

PM I_x → ADAPTIVE PRECODER

FIXED PRECODER ← PM I_0

1403

ANCHOR BASE STATION:1401

COOPERATIVE RELAY STATION:1402

ANCHOR BASE STATION

MOBILE TERMINAL FOR WHICH ANCHOR BASE STATION 1401 AND COOPERATIVE RELAY STATION 1402 PERFORM COOPERATIVE COMMUNICATION

COOPERATIVE RELAY STATION

EP 2 445 253 A1

# FIG.9

DATA SIGNAL HAVING BEEN SUBJECTED TO PRECODING BY USING PMI_x

DATA SIGNAL HAVING BEEN SUBJECTED TO PRECODING BY USING ANY OF PMI_0 TO PMI_3

PERIODICAL SWITCHING

PM I_x → ADAPTIVE PRECODER

FIXED PRECODER

PM I_0
PM I_1
PM I_2
PM I_3

1603

ANCHOR BASE STATION:1601

ANCHOR BASE STATION

MOBILE TERMINAL FOR WHICH ANCHOR BASE STATION 1601 AND COOPERATIVE BASE STATION 1602 PERFORM COOPERATIVE COMMUNICATION

COOPERATIVE BASE STATION:1602

COOPERATIVE BASE STATION

WIRED CHANNEL (OPTICAL FIBER ETC.)

EP 2 445 253 A1

# FIG.10

SYSTEM FRAME LENGTH

SUBFRAME LENGTH

RESOURCE BLOCK WIDTH

| | | | | | | | | | | |
|---|---|---|---|---|---|---|---|---|---|---|
| PMI 0 | PMI 1 | PMI 2 | PMI 3 | PMI 0 | PMI 1 | PMI 2 | PMI 3 | PMI 0 | PMI 1 | RESOURCE BLOCK NUMBER:7 |
| PMI 0 | PMI 1 | PMI 2 | PMI 3 | PMI 0 | PMI 1 | PMI 2 | PMI 3 | PMI 0 | PMI 1 | RESOURCE BLOCK NUMBER:6 |
| PMI 0 | PMI 1 | PMI 2 | PMI 3 | PMI 0 | PMI 1 | PMI 2 | PMI 3 | PMI 0 | PMI 1 | RESOURCE BLOCK NUMBER:5 |
| PMI 0 | PMI 1 | PMI 2 | PMI 3 | PMI 0 | PMI 1 | PMI 2 | PMI 3 | PMI 0 | PMI 1 | RESOURCE BLOCK NUMBER:4 |
| PMI 0 | PMI 1 | PMI 2 | PMI 3 | PMI 0 | PMI 1 | PMI 2 | PMI 3 | PMI 0 | PMI 1 | RESOURCE BLOCK NUMBER:3 |
| PMI 0 | PMI 1 | PMI 2 | PMI 3 | PMI 0 | PMI 1 | PMI 2 | PMI 3 | PMI 0 | PMI 1 | RESOURCE BLOCK NUMBER:2 |
| PMI 0 | PMI 1 | PMI 2 | PMI 3 | PMI 0 | PMI 1 | PMI 2 | PMI 3 | PMI 0 | PMI 1 | RESOURCE BLOCK NUMBER:1 |
| PMI 0 | PMI 1 | PMI 2 | PMI 3 | PMI 0 | PMI 1 | PMI 2 | PMI 3 | PMI 0 | PMI 1 | RESOURCE BLOCK NUMBER:0 |
| SUBFRAME NUMBER:0 | SUBFRAME NUMBER:1 | SUBFRAME NUMBER:2 | SUBFRAME NUMBER:3 | SUBFRAME NUMBER:4 | SUBFRAME NUMBER:5 | SUBFRAME NUMBER:6 | SUBFRAME NUMBER:7 | SUBFRAME NUMBER:8 | SUBFRAME NUMBER:9 | |

FREQUENCY

TIME

34

# FIG.11

SYSTEM FRAME LENGTH

SUBFRAME LENGTH

RESOURCE BLOCK WIDTH

FREQUENCY

| | | | | | | | | | | |
|---|---|---|---|---|---|---|---|---|---|---|
| PM I 3 | PM I 2 | PM I 1 | PM I 0 | PM I 3 | PM I 2 | PM I 1 | PM I 0 | PM I 3 | PM I 2 | RESOURCE BLOCK NUMBER:7 |
| PM I 2 | PM I 1 | PM I 0 | PM I 3 | PM I 2 | PM I 1 | PM I 0 | PM I 3 | PM I 2 | PM I 1 | RESOURCE BLOCK NUMBER:6 |
| PM I 1 | PM I 0 | PM I 3 | PM I 2 | PM I 1 | PM I 0 | PM I 3 | PM I 2 | PM I 1 | PM I 0 | RESOURCE BLOCK NUMBER:5 |
| PM I 0 | PM I 3 | PM I 2 | PM I 1 | PM I 0 | PM I 3 | PM I 2 | PM I 1 | PM I 0 | PM I 3 | RESOURCE BLOCK NUMBER:4 |
| PM I 3 | PM I 2 | PM I 1 | PM I 0 | PM I 3 | PM I 2 | PM I 1 | PM I 0 | PM I 3 | PM I 2 | RESOURCE BLOCK NUMBER:3 |
| PM I 2 | PM I 1 | PM I 0 | PM I 3 | PM I 2 | PM I 1 | PM I 0 | PM I 3 | PM I 2 | PM I 1 | RESOURCE BLOCK NUMBER:2 |
| PM I 1 | PM I 0 | PM I 3 | PM I 2 | PM I 1 | PM I 0 | PM I 3 | PM I 2 | PM I 1 | PM I 0 | RESOURCE BLOCK NUMBER:1 |
| PM I 0 | PM I 3 | PM I 2 | PM I 1 | PM I 0 | PM I 3 | PM I 2 | PM I 1 | PM I 0 | PM I 3 | RESOURCE BLOCK NUMBER:0 |

SUBFRAME NUMBER:0
SUBFRAME NUMBER:1
SUBFRAME NUMBER:2
SUBFRAME NUMBER:3
SUBFRAME NUMBER:4
SUBFRAME NUMBER:5
SUBFRAME NUMBER:6
SUBFRAME NUMBER:7
SUBFRAME NUMBER:8
SUBFRAME NUMBER:9

TIME

## FIG.12

| | SUBFRAME NUMBER:0 | SUBFRAME NUMBER:1 | SUBFRAME NUMBER:2 | SUBFRAME NUMBER:3 | SUBFRAME NUMBER:4 | SUBFRAME NUMBER:5 | SUBFRAME NUMBER:6 | SUBFRAME NUMBER:7 | SUBFRAME NUMBER:8 | SUBFRAME NUMBER:9 | | |
|---|---|---|---|---|---|---|---|---|---|---|---|---|
| RESOURCE BLOCK NUMBER:7 | PMI 1 | PMI 3 | PMI 0 | PMI 2 | PMI 1 | PMI 3 | PMI 0 | PMI 2 | PMI 1 | PMI 3 | SUB BAND NUMBER:1 |
| RESOURCE BLOCK NUMBER:6 | PMI 1 | PMI 3 | PMI 0 | PMI 2 | PMI 1 | PMI 3 | PMI 0 | PMI 2 | PMI 1 | PMI 3 | |
| RESOURCE BLOCK NUMBER:5 | PMI 1 | PMI 3 | PMI 0 | PMI 2 | PMI 1 | PMI 3 | PMI 0 | PMI 2 | PMI 1 | PMI 3 | |
| RESOURCE BLOCK NUMBER:4 | PMI 1 | PMI 3 | PMI 0 | PMI 2 | PMI 1 | PMI 3 | PMI 0 | PMI 2 | PMI 1 | PMI 3 | |
| RESOURCE BLOCK NUMBER:3 | PMI 0 | PMI 2 | PMI 1 | PMI 3 | PMI 0 | PMI 2 | PMI 1 | PMI 3 | PMI 0 | PMI 2 | SUB BAND NUMBER:0 |
| RESOURCE BLOCK NUMBER:2 | PMI 0 | PMI 2 | PMI 1 | PMI 3 | PMI 0 | PMI 2 | PMI 1 | PMI 3 | PMI 0 | PMI 2 | |
| RESOURCE BLOCK NUMBER:1 | PMI 0 | PMI 2 | PMI 1 | PMI 3 | PMI 0 | PMI 2 | PMI 1 | PMI 3 | PMI 0 | PMI 2 | |
| RESOURCE BLOCK NUMBER:0 | PMI 0 | PMI 2 | PMI 1 | PMI 3 | PMI 0 | PMI 2 | PMI 1 | PMI 3 | PMI 0 | PMI 2 | |

SYSTEM FRAME LENGTH

SUBFRAME LENGTH

SUB BAND WIDTH

RESOURCE BLOCK WIDTH

FREQUENCY

TIME

EP 2 445 253 A1

# FIG.13

COOPERATIVE
BASE STATION

ANCHOR
BASE STATION

MOBILE
TERMINAL

PM Ix(1), PM Iy(1)

PM Iy(1)

COOPERATIVE
COMMUNICATION

Data_y(PM Iy(1))

Data_x(PM Ix(1))

PM Ix(2)

Data_y(PM Iy(1))

Data_x(PM Ix(2))

PM Ix(3)

Data_y(PM Iy(1))

Data_x(PM Ix(3))

PM Ix(4)

Data_y(PM Iy(1))

Data_x(PM Ix(4))

PM Ix(5), PM Iy(5)

PM Iy(5)

Data_y(PM Iy(5))

Data_x(PM Ix(5))

EP 2 445 253 A1

# FIG.14

ADAPTIVE PRECODER

PM $I_x$ →

CHANNEL STATE INFORMATION (CSI_y) FOR COOPERATIVE BASE STATION 2102

CHANNEL STATE INFORMATION (CSI_x) FOR ANCHOR BASE STATION 2101

FIXED PRECODER

→ PM $I_0$

2103

ANCHOR BASE STATION:2101

ANCHOR BASE STATION

MOBILE TERMINAL FOR WHICH ANCHOR BASE STATION 2101 AND COOPERATIVE BASE STATION 2102 PERFORM COOPERATIVE COMMUNICATION

COOPERATIVE BASE STATION:2102

COOPERATIVE BASE STATION

WIRED CHANNEL (OPTICAL FIBER ETC.)

EP 2 445 253 A1

# FIG.15

PM _l_x → ADAPTIVE PRECODER

DATA SIGNAL HAVING BEEN SUBJECTED TO PRECODING BY USING PMI_x

DATA SIGNAL HAVING BEEN SUBJECTED TO PRECODING BY USING PMI_0

FIXED PRECODER ← PM _l_0

2103

ANCHOR BASE STATION:2101

MOBILE TERMINAL FOR WHICH ANCHOR BASE STATION 2101 AND COOPERATIVE BASE STATION 2102 PERFORM COOPERATIVE COMMUNICATION

COOPERATIVE BASE STATION:2102

ANCHOR BASE STATION

COOPERATIVE BASE STATION

WIRED CHANNEL (OPTICAL FIBER ETC.)

EP 2 445 253 A1

# FIG.16

CHANNEL STATE MEASUREMENT REFERENCE SIGNAL IN BASE STATION 101 / TRANSMISSION DATA SIGNAL FOR MOBILE TERMINAL 103

CHANNEL STATE MEASUREMENT REFERENCE SIGNAL IN BASE STATION 102 / TRANSMISSION DATA SIGNAL FOR MOBILE TERMINAL 103

BASE STATION:101

BASE STATION:102

103

MOBILE TERMINAL FOR WHICH BASE STATION 101 AND BASE STATION 102 PERFORM COOPERATIVE COMMUNICATION

# FIG.17

CHANNEL STATE
MEASUREMENT
REFERENCE SIGNAL

201

DATA
SIGNAL → ADAPTIVE
CONTROL
SECTION → MULTI-
PLEXING
SECTION

203

202

FEEDBACK
INFORMATION
PROCESSING
SECTION

204

205

BASE STATION

DOWNLINK

UPLINK

210

211    212

SEPARATION
SECTION → DATA
SIGNAL

CHANNEL STATE
MEASUREMENT
REFERENCE SIGNAL

214    FEEDBACK
INFORMATION
GENERATION
SECTION

213

MOBILE TERMINAL

EP 2 445 253 A1

# FIG.18

# FIG.19

ANCHOR BASE STATION:801

ANCHOR BASE STATION

PM Ix → ADAPTIVE PRECODER

PRECODING CONTROL INFORMATION (PMI_y) FOR COOPERATIVE BASE STATION 802

PRECODING CONTROL INFORMATION (PMI_x) FOR ANCHOR BASE STATION 801

803

MOBILE TERMINAL FOR WHICH ANCHOR BASE STATION 801 AND COOPERATIVE BASE STATION 802 PERFORM COOPERATIVE COMMUNICATION

ADAPTIVE PRECODER ← PM Iy

COOPERATIVE BASE STATION:802

COOPERATIVE BASE STATION

WIRED CHANNEL (OPTICAL FIBER ETC.)

PRECODING CONTROL INFORMATION (PMI_y) FOR COOPERATIVE BASE STATION 802

EP 2 445 253 A1

# FIG.20

DATA SIGNAL HAVING BEEN SUBJECTED TO PRECODING BY USING PMI_x

DATA SIGNAL HAVING BEEN SUBJECTED TO PRECODING BY USING PMI_y

PMI_x → ADAPTIVE PRECODER

ADAPTIVE PRECODER ← PMI_y

803

ANCHOR BASE STATION:801

COOPERATIVE BASE STATION:802

MOBILE TERMINAL FOR WHICH ANCHOR BASE STATION 801 AND COOPERATIVE BASE STATION 802 PERFORM COOPERATIVE COMMUNICATION

ANCHOR BASE STATION

COOPERATIVE BASE STATION

WIRED CHANNEL (OPTICAL FIBER ETC.)

PRECODING CONTROL INFORMATION (PMI_y) FOR COOPERATIVE BASE STATION 802

EP 2 445 253 A1

## FIG.21

COMMON PRECODING CONTROL INFORMATION (PMI_z) FOR ANCHOR BASE STATION 1001 AND COOPERATIVE BASE STATION 1002

PM $\underline{I}$z → ADAPTIVE PRECODER

ADAPTIVE PRECODER ← PM $\underline{I}$z

1003

ANCHOR BASE STATION:1001

ANCHOR BASE STATION

MOBILE TERMINAL FOR WHICH ANCHOR BASE STATION 1001 AND COOPERATIVE BASE STATION 1002 PERFORM COOPERATIVE COMMUNICATION

COOPERATIVE BASE STATION:1002

COOPERATIVE BASE STATION

WIRED CHANNEL (OPTICAL FIBER ETC.)

PRECODING CONTROL INFORMATION (PMI_z) FOR COOPERATIVE BASE STATION 1002

EP 2 445 253 A1

## FIG.22

PM $l$ z → ADAPTIVE PRECODER

DATA SIGNAL HAVING BEEN SUBJECTED TO PRECODING BY USING PMI_z

DATA SIGNAL HAVING BEEN SUBJECTED TO PRECODING BY USING PMI_z

ADAPTIVE PRECODER ← PM $l$ z

1003

ANCHOR BASE STATION:1001

MOBILE TERMINAL FOR WHICH ANCHOR BASE STATION 1001 AND COOPERATIVE BASE STATION 1002 PERFORM COOPERATIVE COMMUNICATION

COOPERATIVE BASE STATION:1002

ANCHOR BASE STATION

COOPERATIVE BASE STATION

WIRED CHANNEL (OPTICAL FIBER ETC.)

PRECODING CONTROL INFORMATION (PMI_z) FOR COOPERATIVE BASE STATION 1002

EP 2 445 253 A1

## INTERNATIONAL SEARCH REPORT

| | International application No. |
|---|---|
| | PCT/JP2010/058840 |

A. CLASSIFICATION OF SUBJECT MATTER
*H04W28/18*(2009.01)i, *H04B7/04*(2006.01)i, *H04J11/00*(2006.01)i, *H04J99/00*
(2009.01)i

According to International Patent Classification (IPC) or to both national classification and IPC

B. FIELDS SEARCHED

Minimum documentation searched (classification system followed by classification symbols)
H04W28/18, H04B7/04, H04J11/00, H04J99/00

Documentation searched other than minimum documentation to the extent that such documents are included in the fields searched

| Jitsuyo Shinan Koho | 1922-1996 | Jitsuyo Shinan Toroku Koho | 1996-2010 |
|---|---|---|---|
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | ZTE, DL Reference Signal Design for CSI<br>generation in LTE-Advanced, R1-091436, 2009.03.<br>27 | 9,16<br>1-8,10-15,<br>17-19 |

☐ Further documents are listed in the continuation of Box C. ☐ See patent family annex.

| | |
|---|---|
| *   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>23 August, 2010 (23.08.10) | Date of mailing of the international search report<br>31 August, 2010 (31.08.10) |
|---|---|
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- 3rd Generation Partnership Project; Technical Specification Group Radio Access Network; Further Advancements for E-UTRA Physical Layer Aspects (Release 9). *3GPP TR 36.814 V1.1.1,* June 2009

- 3rd Generation Partnership Project; Technical Specification Group Radio Access Network; Evolved Universal Terrestrial Radio Access (E-UTRA); Physical layer procedures (Release 8). *3GPP TS 36.213 V8.7.0,* May 2009